# EUROPEAN PATENT SPECIFICATION

(11) **EP 4 455 079 B1**
(45) Date of publication and mention of the grant of the patent: **06.05.2026**
(21) Application number: 22909960.1
(22) Date of filing: 19.12.2022
(51) Int. Cl.: C01B 21/38, B01J 15/00, B01J 19/32

(54) **AMMOXIDATION REACTOR AND METHOD FOR PRODUCING NITRIC ACID**
AMMOXIDATIONSREAKTOR UND VERFAHREN ZUR HERSTELLUNG VON SALPETERSÄURE
RÉACTEUR D'AMMOXYDATION ET MÉTHODE DE PRODUCTION D'ACIDE NITRIQUE

(30) Priority: 20.12.2021 CN 202111564430; 20.12.2021 CN 202123220675 U
(43) Date of publication of application: 30.10.2024
(73) Proprietor: Sedin Engineering Co., Ltd., Taiyuan, Shanxi 030000 (CN)
(72) Inventor: ZHOU, Jun, Taiyuan, Shanxi 030000 (CN); WANG, Jining, Taiyuan, Shanxi 030000 (CN); ZHAO, Shiping, Taiyuan, Shanxi 030000 (CN); HAN, Fang, Taiyuan, Shanxi 030000 (CN); WANG, Junting, Taiyuan, Shanxi 030000 (CN); YANG, Lu, Taiyuan, Shanxi 030000 (CN); SUN, Lin, Taiyuan, Shanxi 030000 (CN); WU, Zhijun, Taiyuan, Shanxi 030000 (CN)
(74) Representative: Herzog IP Patentanwalts GmbH
(86) International application number: PCT/CN2022/140168
(87) International publication number: WO 2023/116648

(56) References cited:
- WO-A1-2013/091770
- CN-A- 102 424 370
- CN-A- 111 892 025
- CN-A- 111 892 025
- CN-A- 114 370 772
- CN-B- 102 424 370
- CN-U- 201 971 639
- CN-U- 213 505 991
- CN-U- 216 614 056
- CN-U- 216 745 500

## Description

### TECHNICAL FIELD

The application relates to the technical field of nitric acid producing equipment, and in particular relates to an ammonia oxidation reactor and method for producing nitric acid.

### BACKGROUND

Ammonia oxidation reactor is the equipment that ammonia and oxygen produce nitrogen oxides via catalytic reaction. According to the different production pressures, the produce of nitric acid in ammonia oxidation reactors can be classified as atmospheric pressure, medium pressure, high pressure and double pressurisation. The production of nitric acid basically involves: the first step of oxidising gaseous ammonia with air over a suitable catalyst to obtain a gaseous product containing oxides of nitrogen; and the second step of contacting the gaseous product with water in order to absorb the above mentioned oxides and obtain HNO₃. The first step of ammonia oxidation is usually carried out under pressure in a suitable vessel (further known as a burner or combustion reactor). The catalyst is typically a platinum wire mesh which is supported by baskets within the reactor or, if necessary, contains under the mesh a high temperature resistant packing support or a high temperature resistant catalyst for N₂O reduction.

In operation, the ammonia-air mixture enters the reactor from the top entrance, passes through the gas distributor, and is evenly distributed in the platinum network to generate a mixture of nitric oxide and water vapour, and release a large amount of heat. At the same time, in order to reduce the impact of high temperature on the equipment chamber and equipment flange, the equipment is covered with a layer of water-cooled walls in the inside wall; the existing distributor distribution is not uniform, resulting in bias flow leading to inadequate burning reaction, and likely to cause the platinum mesh and platinum mesh under the temperature of the uneven radial distribution of the affected nitrogen monoxide production yield.

In addition, in order to achieve the efficiency of the heat in the ammonia oxidation reactor, a heat recovery device is set up in the ammonia oxidation reactor, and a water-cooled wall module is set up in order to prevent damage to the equipment from excessively high temperatures; wherein the coiled tube module for the heat recovery device consists of a multi-layer coiled tubes that are connected in the direction of head to tail and are arranged in a upright direction, and each layer of the coiled tubes is a seamless tube coiled at an equal spacing and each layer of the coiled tubes is coiled in the same way. According to the installation position of each layer of coiler in the ammonia oxidation reactor, the temperature absorption is also different, the heat absorption of heat is also different, at the same time, with the use of ammonia oxidation reactor age increasing, each layer of the level of coiler can not maintain the original winding state resulting in the phenomenon of uneven heat transfer and the reduction of the heat transfer efficiency. In summary, the existing ammonia oxidation reactor for the producing of nitric acid presents high ammonia consumption, high platinum catalyst consumption, high energy consumption, low heat recycling rate, and short service life. Some relevant prior art documents are CN 111 892 025 A, CN 102 424 370 B, CN 213 505 991 U.

### SUMMARY

The present application is intended to address, at least in part, one of the technical problems in the related technology.

The essential features of the invention are laid out in independent device claim 1 and method claim 12. Further, preferred embodiments are described in dependent claims 2-11 and 13-14.

In some embodiments, said heat recycling unit further comprises a water-cooled wall tube group; said water-cooled wall tube group is circumferentially disposed inside the furnace interior close to said shell; and said water-cooled wall tube group is disposed at an external circumferential periphery of said coil assembly.

In some embodiments, said coil assembly comprises a plurality of fixing assemblies, each said coil being provided with one said fixing assembly; said fixing assemblies comprising a plurality of tie-downs; the a plurality of said tie-downs each being provided radially circumferentially in the plane of said coil and wrapped around the exterior of said coil to tie down said coil.

In some embodiments, said fixing assembly comprises an position adjustment assembly, said position adjustment assembly comprising:
a plurality of first position adjustment assemblies; a plurality of said first position adjustment assemblies are each arranged radially in the plane of said coil; said first position adjustment assemblies comprise a plurality of first locating members arranged radially along the same orientation; said first locating members are located in the space between said first coil ring and said second coil ring; said first locating members comprise two first locating blocks arranged backwardly; two the said first locating blocks are semi-enclosed to said first coil ring and said second coil ring respectively; and
a plurality of second position adjustment assemblies; a plurality of said second position adjustment assemblies are radially arranged in the plane of said coils; said second position adjustment assemblies comprise a plurality of second locating members radially arranged along the same orientation; said second locating members are located in the space between said first coil ring and said second coil ring; said second locating members comprise two second locating blocks arranged backwardly; two the said second locating blocks are semi-enclosed to said first coil ring and said second coil ring respectively;
wherein, within the horizontal plane of said coil, said first position adjustment assembly and said second position adjustment assembly are located on each side of said tie member.

In some embodiments, said first locating member and said second locating member are both spaced apart within a space between said first coil ring and said second coil ring, and said first locating member and said second locating member are alternately disposed within the spacing formed by said first coil ring and said second coil ring.

In some embodiments, said coil assembly comprises a plurality of airflow dispersing members, each said coil being provided with one said airflow dispersing member above said coil; said airflow dispersing members correlating to said "S" shaped structure in the axial direction of said coil assembly, said airflow dispersing members shield said "S" shaped structure.

In some embodiments, said inlet header is provided with at least two throttle hole joints; two of said throttle hole joints are connected to two of said coil assemblies.

In some embodiments, said inlet header is provided with at least two throttle hole joints; two of said throttle hole joints are connected to two of said coil assemblies.
a plurality of water-cooled wall tubes; a plurality of side-by-side of said water-cooled wall tubes are helically coiled with equal pitch in the axial direction of said furnace chamber; a second inlet guide tube and a second outlet guide tube are provided at each end of each of said water-cooled wall tubes separately;
an outlet centralise tube, said second outlet guide tube on each said water-cooled wall tube being connected to said outlet centralise tube separately; and
inlet centralise tubes, said second inlet guide tube on each said water-cooled wall tube individually connecting said inlet centralise tubes.

In some embodiments, a plurality of said water-cooled wall tubes are in the same plane with said furnace chamber at their highest point in the axial direction.

In some embodiments, said heat recycling unit comprises a shroud; said shroud is positioned on an outer circumferential edge of said coil assemblies, and said shroud is positioned between said coil assemblies and said water-cooled wall tube group.

In some embodiments, said combustion unit further comprises a support assemble for supporting the fixation of said platinum mesh layer; said support assemble comprising a support member, said support member disposed underneath said platinum mesh layer for supporting said platinum mesh layer.

In some embodiments, said support assemble further comprises a elastic compression member, said elastic compression member comprising a gasket, an inverted T-shaped support ring, a elastic snap ring, and a cylinder section;
wherein said platinum mesh layer is provided with gaskets on each side above and below; wherein said inverted T-shaped support ring is set on the exterior of hollow circular said cylinder section; said elastic snap ring is set on top of said inverted T-shaped support ring; the central axis of said inverted T-shaped support ring, said elastic snap ring, and said hollow circular cylinder section are coincidental; and a pressure strip is set in said top cover, said pressure strip is connected in contact with said elastic snap ring.

In some embodiments, said inverted T-shaped support ring comprises a support circle and a support ring; wherein said support circle is fixedly set on the exterior of the hollow circular of said cylinder section; said support ring is fixedly set above said support circle; and said elastic snap ring is set above said support ring.

In some embodiments, said support circle is fixed welded to outer side of said barrel section.

In some embodiments, the diameter of said support ring is smaller than the diameter of said support circle, and said support ring is vertically weld fixed in the middle of said support circle.

In some embodiments, said elastic snap ring is snapped onto said support ring, said elastic snap ring has a gap with said barrel knuckle, and the diameter of said elastic snap ring is in excess of the diameter of said support circle.

In some embodiments, said barrel knuckle is a high temperature resistant alloy.

In some embodiments, a platinum mesh compression ring is positioned between said gasket and said barrel knuckle.

In some embodiments, said support structure comprises at least a base, said base being located below an outer edge of said platinum mesh layer.

In some embodiments, said support structure further comprises a grid support frame, said grid support frame being disposed below said platinum mesh layer.

In some embodiments, said combustion unit further comprises a gas distributor; wherein said gas distributor is positioned inside said furnace chamber.

In some embodiments, said combustion unit further comprises a deflector cone; wherein said deflector cone is disposed on said top cover and inside said furnace chamber, and said gas distributor is positioned inside said deflector cone to evenly distribute a mixture of ammonia gas and air over said platinum mesh layer.

According to the invention, said combustion unit further comprises an ignition assemble; wherein said ignition assemble comprises an igniter, an ignition distributor tube, and an ignition gas tube; wherein said igniter ignites an ignition gas passed through said ignition gas tube and ignites the entirety of said platinum mesh layer using said ignition distributor tube.

In some embodiments, said top cover is provided with at least one viewing window for observing combustion within said furnace chamber.

In some embodiments, said top cover is equipped with a protective air tube; for passing a protective gas into said furnace chamber to prevent high temperatures in the dead zone.

In order to achieve the purposes set forth above, a method for producing nitric acid is described according to the invention, wherein an ammonia oxidation reactor such as in any of the embodiments set forth above is utilised for the production of nitric acid.

In some embodiments, the process method for producing nitric acid comprises the steps of;
Using an ignition assemble on the platinum mesh layer to ignite the ammonia gas entering the furnace chamber and oxidise the ammonia gas to obtain a hot gas stream containing nitrogen oxides; in the meanwhile using the gravitational force of the top cover itself to press down the end of the elastic snap ring away from the barrel section to form an elastic deformation according to the contact between the pressure strip inside said top cover and the elastic snap ring, to achieve a seal and at the same time to press down said platinum mesh layer;
The reacted hot airflow passes downward orderly through the second space of at least two coil assemblies in said furnace chamber, exchanges heat between the hot airflow and the medium in said coil assemblies, cooperates with the guard tube so that the hot airflow passes through each layer of the coils orderly from the top to the bottom to the maximum extent, and makes use of the airflow dispersing member to block the "S"-shaped structure in the middle of the coils of each layer, and prevent the hot airflow from being transmitted downward from the "S" shaped structure to form an airflow short circuit; at the same time, the water-cooled wall tube group is used to reduce the wall temperature of the shell;
wherein after the combustion reaction on said platinum mesh layer has stabilised, said ignition assemble was stopped and the flow of ignition gas was stopped.

In some embodiments, said post-reaction hot gas stream's temperature is 800-1000°C and the outlet temperature is 350-450°C after heat exchange with said coil assemblies.

In some embodiments, said furnace chamber inlet gas is an ammonia-air mixture comprising ammonia and air; wherein the ammonia-air mixture is at a temperature of 200-400°C, and wherein the molar volume ratio of ammonia to air is 8-12%, based on the ammonia-air mixture.

Additional aspects and advantages of the application will be given in part in the following description, in part will become apparent from the following description, or will be learned through the practice of the application.

Compared to the existing technology, this application provided the support assemble to elastic ally fix the platinum mesh layer, and the platinum mesh layer is pressured by using the gravity of the top cover itself, with the elastic compression device as the object of transmitting the force, and when the top cover is sealed, the compression strip welded on the cylinder in the inner and lower parts of the top cover is in contact with the elastic snap ring, and the elastic snap ring is downwardly pressed on the end far away from the cylinder section to form the elastic deformation, so that it achieves the sealing and at the same time presses the platinum mesh layer. In addition, the heat recycling unit in this application enables the high temperature gas to be uniformly distributed in sequence and to pass downwardly in order; the high temperature gas is carried out from the top to the bottom after heat exchange and discharged and enters the back process, the heat recycling unit in the embodiment of the application is able to recycle the heat energy and reduce the influence of high temperature on the safety and reliability of the ammonia oxidation reactor, so as to stabilise the process conditions for the production of nitric acid, and to achieve the purpose of the production of nitric acid.

### BRIEF DESCRIPTION OF THE DRAWINGS

The above-mentioned and/or additional aspects and advantages of the present application will become apparent and easily understood from the following description of the embodiments in combination with the accompanying drawings, wherein:
FIG.1 is a structural drawing of an ammonia oxidation reactor provided by an embodiment of the application;
FIG.2 is a structural drawing of a heat recycling unit in an ammonia oxidation reactor provided by an embodiment of the application;
FIG.3 is a top view of coil assemblies provided by an embodiment of the application;
FIG.4 is a structural drawing of a water-cooled wall tube provided by an embodiment of the application;
FIG.5 is a structural drawing of the unfolded structure of a water-cooled wall tube provided by an embodiment of the application;
FIG.6 is a structural drawing of an coil provided by an embodiment of the application;
FIG.7 is a structural drawing of another coil set in the lower level of the coil in Figure 6;
FIG.8 is a section structural drawing of an coil provided by an embodiment of the application;
FIG.9 is a top view of FIGs.8;
FIG.10 is a structural drawing of a support assemblies provided by an embodiment of the application;
FIG.11 is a flow chart for the production of nitric acid provided by an embodiment of the application;

Descriptions of Reference Numbers:
1000, ammonia oxidation reactor;
100, heat recycling unit;
1, coil assemblies;
11, coil;
111, first coil ring; 112, second coil ring; 113, first inlet guide tube; 114, first outlet guide tube;
12, fixing assembly; 121, tie member; 122, position adjustment assembly; 1221, first position adjustment assembly; 12211, first locating member; 122111, first locating block; 1222, second position adjustment assembly; 12221, second locating member; 122211, second locating block;
13, airflow dispersing parts;
2, inlet header;
3, outlet header;
4, water-cooled wall tube group;
41, water-cooled pipe; 411, second inlet guide tube; 412, second outlet guide tube;
42, outlet centralise tube;
43, inlet centralise tube;
45, guard cylinder;
200, shell;
300, furnace chamber;
400, top cover; 401, compression strip;
500, combustion unit; 501, platinum mesh layer; 502, grid support frame;
51, support assembly;
511, platinum mesh compression ring; 512, base; 513, gasket; 514, cylinder section; 515, support circle; 516, elastic snap ring; 517, support ring;
52, gas distributor; 53, deflector cone; 54, ignition assembly; 541, igniter; 542, ignition distributor tube; 543, ignition gas tube; 55, viewing window.

### DETAILED DESCRIPTION OF THE EMBODIMENTS

embodiments of the application are described in detail below, and the embodiments are shown in the accompanying drawings, wherein the same or similar labels throughout represent the same or similar elements or elements having the same or similar functions. The embodiments described below with reference to the accompanying drawings are exemplary and are intended to be used for explaining the present application and are not to be construed as a limitation of the present application.

In related technology, an ammonia oxidation reactor includes a shell, wherein the coil assemblies include at least two sets of coil assemblies, the two coil assemblies being positioned in an axial direction of the shell, wherein the axial direction of the coil assemblies coincides with the axial direction of the shell. The two coil assemblies are a coil assembly for an evaporation section and a coil assembly for a subthermal section. The coil assembly include a plurality of horizontal coils set side by side in the axial direction of the shell, wherein the horizontal coil are coiled for the coils to be coiled in the plane in accordance with an equally spiraling manner.

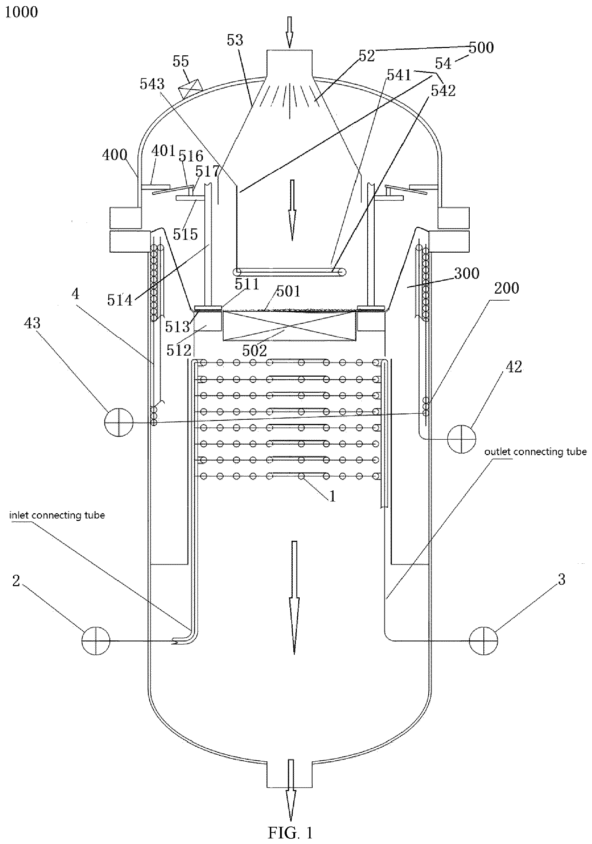

For easy understanding, the axial direction of the shell 200 in the embodiment of the application is same as the up and down direction, and the radial direction is same as the left and right direction, as shown in FIG. 1.

In related technology, on each layer of horizontal coils drawn out in varying numbers of the first inlet guide tube and the first outlet guide tube, although the heat transfer efficiency is improved to a degree, but the coils of each layer of the coil assemblies are sorted in a messy way, not easy to maintenance and difficult to produce, which not only increases the cost of the heat transfer and is not convenient for the management of the heat transfer. At the same time, with the use of ammonia oxidation reactor, the distribution position of the different layers of coils with different temperatures, the same layer of horizontal coils can not always maintain equal spacing coiled, resulting in uneven heat transfer, heat transfer efficiency is reduced. Therefore, how to provide a compact and well-regulated ammonia oxidation reactor heat recycling unit 100 for efficiently recycling heat generated by a combustion reaction of an ammonia oxidation reactor, in order to save energy consumption and reduce the impact of high temperature on the safety and reliability of the ammonia oxidation reactor.

In order to enable a better understanding of the above purposes, features and advantages of the application, the application is described in further detail below in connection with the accompanying drawings and specific embodiments of embodiments. It is to be noted that the embodiments and the features in the embodiments of the application can be combined with each other without conflict.

Many specific details are described in the following description in order to facilitate a full understanding of the application, however, the application may also be carried out in other ways different from those described herein, and thus the scope of protection of the application is not limited by the specific embodiments disclosed below.

As shown in FIG. 1, a structural drawing of an ammonia oxidation reactor 1000 is provided, wherein an ammonia oxidation reactor 1000 for the production of nitric acid comprises: a shell 200 and a top cover 400 capped above the shell 200 forming a furnace chamber 300, a combustion unit 500, and a heat recycling unit 100; wherein the furnace chamber 300 comprises a first space and a second space that are connected at upward and downward;
the combustion unit 500 is located in the first space and comprises a platinum mesh layer 501; a combustion reaction is carried out with the platinum mesh layer 501 as a medium until it is at a temperature that can oxidise the ammonia gas entering the furnace chamber 300 to form nitrogen oxides; and
the heat recycling unit 100, which is positioned in the second space, is used for heat recycling of a hot gas stream generated by combustion of the combustion unit 500 inside the first space and migrating to the second space; the heat recycling unit 100 comprising: at least two coil assemblies 1 and a water-cooled wall tube group 4; wherein the two coil assemblies 1 are positioned at different heights inside the casing 200 in the axial direction of the coil assemblies 1, respectively, and wherein the two coil assemblies 1 are connected in parallel between an inlet header 2 and an outlet header 3;
the coil assembly 1 includes a plurality of coil tubes 11 set in an axial direction along the coil assembly 1; the coil tube 11 are connected to the first inlet guide tube 113 and the first outlet guide tube 114 at each end of the coil tube 11; the first outlet guide tube 114 of the upper layer of coil tubes 11 corresponds in the axial direction of the coil assembly 1 to the first inlet guide tube 113 of the lower layer of coil tubes 11; the first inlet guide tube 113 is connected to the inlet header 2, and the first outlet guide tube 114 is connected to the outlet header 3;

In the horizontal plane of the coiler tube 11, the coiler tube 11 is coiled from the end of the first inlet guide tube 113 from the outside to the inside in an isometric helical manner in the first direction to form a plurality of first coiler rings 111 of different circle diameters, and the coiler tube 11 is curved into an "S" shape internally and then coiled from the inside to the outside in an isometric helical manner in the second direction to form a plurality of second coiler rings 112 of different circle diameters; wherein the second coiler ring 112 is positioned between two neighbouring first coiler rings 111; wherein the first direction is in the opposite direction to the second direction.

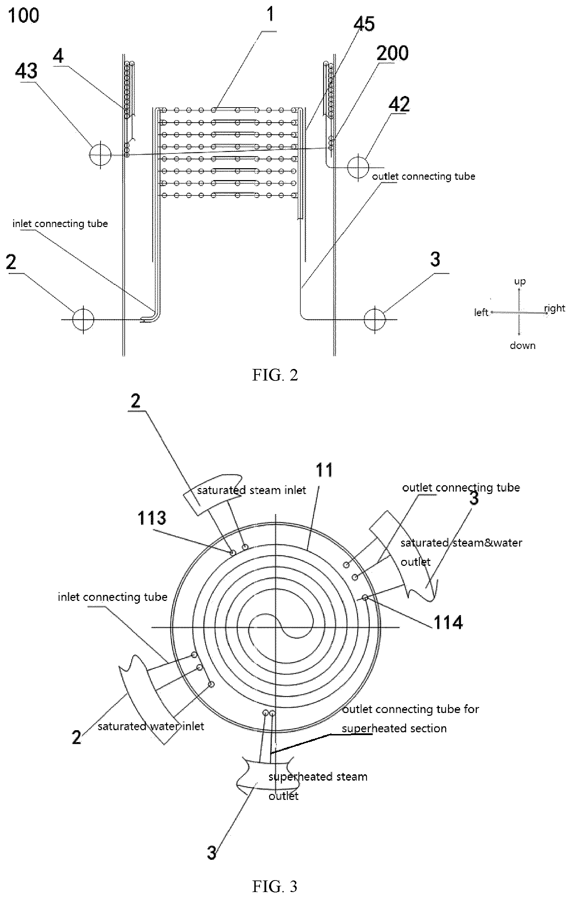

For easy understanding, the axial direction of the housing 200 in the embodiment of the application coincides with the axial direction of the coil assembly 1, specifically with the up and down direction, and the radial direction in the horizontal plane of the coils 11 coincides with the left and right direction, as shown in FIG. 2.

In some embodiments as shown in FIG. 1 and FIG. 2, the heat recycling unit 100 is disposed inside the shell 200 of the ammonia oxidation reactor 1000, wherein the heat recycling unit 100 comprises at least two coil assemblies 1, the at least two coil assemblies 1 being disposed inside the shell 200 side-by-side in an upward and downward direction.

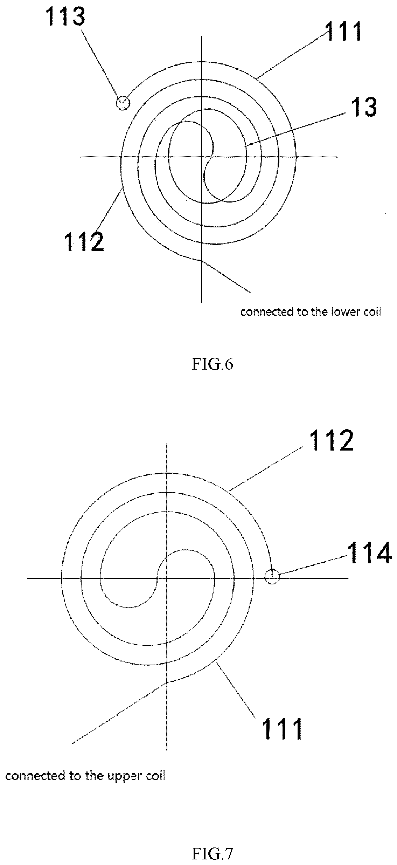

Wherein the coil assembly 1 of the evaporation section and the coil assembly 1 of the subheat section both comprise a plurality of coils 11 disposed side by side in an upward and downward direction, as shown in FIG. 2-FIG. 3 and FIG. 6-FIG. 7. The first inlet guide tube 113 and the first outlet guide tube 114 are positioned at each end of the coil 11, i.e., the inlet end of the coil 11 is connected to the first inlet guide tube 113, and the inlet and outlet ends of the coil 11 are connected to the first outlet guide tube 114. The coil 11 is coiled from the inlet end from the outside to the inside in an equally spaced spiral manner in accordance with a first direction (clockwise or counterclockwise) to form a plurality of first coil rings 111 of different circle diameters; coil 11 in the internal bending into "S" shape and then in the second direction in an equally spaced spiral way from the inside to the outside coiled to form a plurality of different circle diameter of the second coil ring 112, the second coil ring 112 is located in the neighbouring two of the first coil ring 111 between the two, as shown in FIG. 6.

Understandably, when the first direction is clockwise coiling, the second direction is counterclockwise coiling; when the first direction is counterclockwise coiling, the second direction is clockwise coiling. And the first coil ring 111 in the horizontal plane of the coiler 11, from the outside to the inside sequentially arranged and the spacing is the same, but the circle diameter from large to small; similarly the second coil ring 112 in the horizontal plane of the coiler 11, from the inside to the outside sequentially arranged and the spacing is the same, but the circle diameter are from small to large. The second coil ring 112 is positioned between two neighbouring first coil rings 111, at the same distance from the left and right neighbouring first coil rings 111. Understandably, the first inlet guide tube 113 is positioned at the outermost ring of the first coil ring 111 and the first outlet guide tube 114 is positioned at the outermost ring of the second coil ring 112.

It should be noted that the coiler 11 in the embodiments of this application in the actual production process, can be in the same plane in accordance with the same pitch spiral coiled way, can also be assembled by a plurality of arcs or semi-circular line splicing. Understandably, the installation height of each layer of the coiler 11 is different, the temperature is also different, the heat absorbed is also different, for this reason, different layers of the coiler 11 spiral pitch can be different.

Understandably, as shown in FIG. 6 and FIG. 7, the first outlet guide tube 114 of the upper coil 11 corresponds to the first inlet guide tube 113 of the lower coil 11 in the up and down direction, facilitating the assembly connection of the upper coil 11 to the lower coil 11.

Advantageously in order to further handle the fact that each layer of coils 11 is installed at a different height and is at a different temperature from the high temperature to which it is subjected, the coils 11 can be combined. Exemplarily, in order to improve the heat transfer efficiency and increase the service life of the coil assembly 1, in some of the coils 11 in the coil assembly 1 subjected to higher temperatures, each layer of the coils 11 is connected to the inlet header 2 via an inlet connecting tube with a first inlet guide tube 113, and the first outlet guide tube 114 is connected to the outlet header 3 via an outlet connecting tube to realise an inlet end and an outlet end of a layer of the coils 11; in some of the coils 11 subjected to lower temperatures in the coil assembly 1, two layers of coils 11 may be grouped together, and in some embodiments, Fig. 6 shows an upper layer of coils 11 and Fig. 7 shows a lower layer of coils, the first inlet guide tube 113 of the upper layer of coils 11 is connected to the inlet header 2 via the inlet connecting tube; the first outlet guide tube 114 of the upper layer of coils 11 is connected to the first inlet guide tube 113 of the lower layer of coils 11; and the lower layer of coils 11 is connected to the outlet header 3 via the outlet connecting tube. The first outlet guide tube 114 of the lower layer coil 11 is connected to the outlet header 3 via the outlet connecting tube to enable the two-layer coil to have one inlet end and one outlet end, and similarly, when the coil assembly 1 are subjected to a very low temperature of some of the coils 11, the three-layer or even the multi-layer coils 11 are set up with reference to the above to have one inlet end and one outlet end. The above settings are exemplary but not restrictive description, the specific coiler 11 settings of the technical personnel in the field according to the actual needs of the flexible combination can be.

It should be noted that, when the two layers of coils 11 as a group, the upper layer of coils 11 from the inlet end in a clockwise equally spaced spiral way from the outside to the inside of the coil to form a plurality of different circle diameter of the first coil ring 111; and the upper layer of coils 11 in the internal bending into the "S" shape, and then in a counterclockwise equally spaced spiral way from the inside to the outside of the coil to form a circle diameter of different second coil ring 112, the second coil ring 112 is located between the two neighbouring first coil ring 111. The first outlet guide tube 114 of the upper layer coiler 11 is in an upward and downward direction corresponding to the first inlet guide tube 113 of the lower layer coiler 11, which assembles and connects the upper layer coiler 11 with the lower layer coiler 11; the lower layer coiler 11 is coiled from the inlet end from the outside to the inside in the counterclockwise direction in an isometric helix to form a plurality of first coiler loops 111 of different ring diameters, and the lower layer coiler 11 is internally bent into an "S" shape and then in accordance with the clockwise direction in an equally spaced helical manner from the inside to the outside of the coil to form a plurality of second coil ring 112 with different ring diameters, the second coil ring 112 is located between two neighbouring first coil ring 111. That is, when the upper and lower coils 11 are to be connected, the lower coil 11 is coiled in the opposite direction to the upper coil 11.

Wherein in some embodiments, the inlet header 2 is coupled with at least two throttle hole joints; wherein one of the throttle hole joints is connected to a coil assembly of the evaporation section; and wherein the other throttle hole joint is connected to a coil assembly 1 of the subthermal section. Wherein the two throttle hole joints are enabling to make a different amount of water within the coil assembly 1 of the evaporation section and the coil assembly 1 of the subthermal section.

In some embodiments, the coil assembly 1 comprise a plurality of fixing assemblies 12, one fixing assembly 12 being installed on each coil 11; the fixing assembly 12 comprise a plurality of tie-downs 121; a plurality of tie-downs 121 are each installed radially circumferentially within a horizontal plane of the coil 11 and wrapped around the exterior of the coil 11 to tie down the coil 11.

In some embodiments, as shown in FIG. 7-FIG. 9, the tie member 121 is interpreted as a flat steel strip, and the flat steel strip is radially annularly set in the plane of the coil 11 to wrap around the outside of the coil 11. The skilled person in the field may set up a plurality of flat steel strips according to the actual situation, such as setting up 4 flat steel strips, that is, the flat steel strips are spaced apart by 90°; the skilled person in the field may also set up 6 flat steel strips or 8 flat steel strips and so on. One of the knot 121 for ring-shaped wrapped in the coiler 11 external, binding the middle and the edge of coiler 11, to prevent with the extension by the production time of the coiler 11 undergoes deformation, i.e., the distance between the same plane of the coiler 11 of the innermost circle of coiler 11 and the outermost circle of coiler 11 becomes larger, resulting in the situation of uneven heat transfer and decreased efficiency of heat transfer.

Further, the fixing assembly 12 includes an position adjustment assembly 122, the position adjustment assembly 122 includes a plurality of first position adjustment assemblies 1221 and a plurality of second position adjustment assemblies 1222: a plurality of the first position adjustment assemblies 1221 are evenly distributed in a circumferential plane of the coil 11 separately; the first position adjustment assembly 1221 comprises a plurality of first locating members 12211 radially distributed along the same orientation; the first locating member 12211 are snap-fitted in the space between the first coil ring 111 and the second coil ring 112; the first locating member 12211 comprises two backwardly disposed first locating blocks 122111; the first locating block 122111 is snap-fitted in the space between the first coil ring 111 and the second coil ring 112 separately; a plurality of the second position adjustment assemblies 1222 are evenly distributed in a circumferential plane of the coil 11 separately; the second positioning assembly 1222 includes a plurality of second positioning members 12221 distributed radially in the same orientation; the second positioning members 12221 are disposed in the spacing between the first coil ring 111 and the second coil ring 112; the second positioning members 12221 include two second positioning blocks 122211 disposed backwardly; the second positioning blocks 122211 are disposed half-encirclingly to the first coil ring 111 and the second coil ring 112, respectively; the second positioning block 122211 are disposed semi-encirclingly to the first coil ring 111 and the second coil ring 112 separately;

In the horizontal plane of the coil 11 the first position adjustment assembly 1221 and the second position adjustment assembly 1222 are located on each side of the tie member 121.

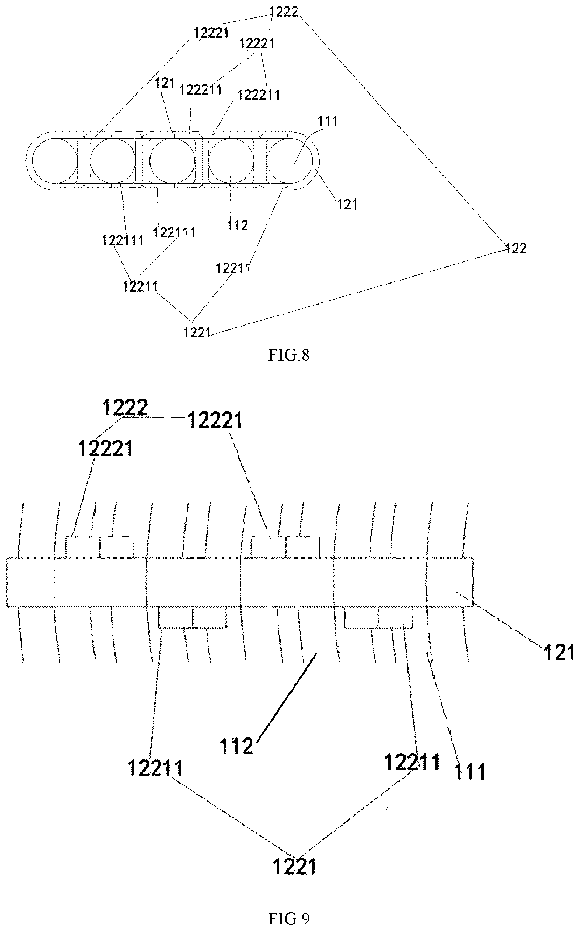

Specifically as shown in FIG. 7 and FIG. 9, the first position adjustment assembly 1221 and the second position adjustment assembly 1222 are evenly disposed in the circumferential plane of the coil 11, and it is understood that both the first position adjustment assembly 1221 and the second position adjustment assembly 1222 are evenly disposed in the circumferential plane.

Wherein the first position adjustment assembly 1221 includes a plurality of first locating members 12211 disposed radially in the same orientation; the first locating members 12211 are snap-fitted the space between the first coil coil 111 and the second coil coil 112; the first locating member 12211 comprises two backwardly disposed first locating blocks 122111; the two first locating blocks 122111 are semi-enclosed to the first coil ring 111 and the second coil ring 112, wherein the first positioning members 12211 includes two first positioning blocks 122111, the first positioning blocks 122111 being similarly "["-shaped, the two first positioning blocks 122111 are disposed backwards, wherein one of the first positioning block 122111 is semi-circumscribedly disposed on the first coil ring 111 and the other first positioning block 122111 is semi-circumscribedly disposed on the second coil ring 112, so that the first positioning member 12211 capably holds the distance between the first coil ring 111 and the second coil ring 112 when the first coil ring 111 undergoes a thermal expansion or cold contraction. Similarly, the second positioning member 12221 can be reasonably deduced, and will not be repeated herein.

In some embodiments, the first locating member 12211 and the second locating member 12221 are both disposed spaced apart within the space between the first coil ring 111 and the second coil ring 112, and the first locating member 12211 and the second locating member 12221 are disposed next to each other. Understandably, the first locating member 12211 and the second locating member 12221 are disposed sequentially side by side in the radial direction of the coil 11, for embodiment, within a plurality of spaces between the first coil ring 111 and the second coil ring 112, and the first locating member 12211, the second locating member 12221, the first locating member 12211, and the second locating member 12221 are disposed sequentially.

Advantageously as shown in FIG. 9, in the horizontal plane of the coil assembly 11, the first position adjustment assembly 1221 and the second position adjustment assembly 1222 are positioned on each side of the tie member 121, and in some embodiments the first locating member 12211 and the second locating member 12221 are located close to the side of the tie member 121, and both the first locating block 122111 and the second locating block 122211 are spot-welded connected with the tie member 121, further facilitating keeping the space between the coils 11.

Understandably, the skilled person in the field can flexibly perform pitch fixing of the coiler 11 according to the production demand and the selection of the material of the coiler 11. Under the enlightenment of the embodiments of the application which proposes pitch fixing of the coiler 11 for the first time, any method of pitch fixing of the coiler 11 is within the limitation of the embodiments of the application, and the embodiments of the application will not be detailed in the description of the other technical means herein.

In some embodiments, the coil assembly 1 comprises a plurality of airflow dispersing members 13, one airflow dispersing member 13 being provided above each coil 11; the airflow dispersing member 13 corresponds to an "S" shaped structure in the axial direction of the coil assembly 1, and provides a shielding for the "S" shaped structure.

In some embodiments, as shown in FIG. 6, the airflow dispersing member 13 can be understood as any form of baffle, and the advantageously airflow dispersing member 13 is connected to a plurality of tie-downs 121, which can be understood as welded, in particular. The airflow dispersing member 13 corresponds to the "S" shaped structure in the middle of each layer of the coil 11 in the coil assembly 1 in the upward and downward directions, shielding the "S" shaped structure and preventing the hot airflow from going downward to form a short circuit of the hot airflow, so as to maximise heat recycling. The setting of the airflow dispersing member 13 allows the hot airflow to be dispersed as evenly as possible to the various layers of the coiler 11, and in accordance with the upper layer of the coiler 11 to the lower layer of the coiler 11 in order to exchange heat, and at the same time to prevent the "S"-shaped structure of the cavity to gather the hot airflow effect.

In some embodiments, the heat recycling unit 100 further comprises a water-cooled wall tube group; the water-cooled wall tube group is circumferentially disposed inside the furnace chamber 300 close to the shell 200; and the water-cooled wall tube group is disposed at an outer circular of the coil assembly.

In some embodiments, the water-cooled wall tube group 4 is circumferentially disposed inside the furnace chamber 300 in close proximity to the shell 200 of the ammonia oxidation reactor 1000; and the water-cooled wall tube group 4 is disposed around an outer circular circumference of the coil assembly 1. In some embodiments, the water-cooled wall tube group 4 is circumferentially disposed inside the shell 200 and disposed around an outer circular circumference of the coil assembly 1.

Wherein, the water-cooled wall tube group 4 includes a plurality of water-cooled wall tubes 41, a plurality of outlet centralise tubes 42 and a plurality of inlet centralise tubes 43; wherein a plurality of the water-cooled wall tubes 41 are disposed side-by-side and the water-cooled wall tubes 41 spirally coiled in an equally pitched helix in the axial direction along the casing 200; on each end of each the water-cooled wall tubes 41 is disposed with the second inlet guide tube 411 and the second outlet guide tube 412 respectively; and a plurality of the second outlet guide tubes 412 are connected to the outlet centralise tubes 42; a plurality of the second inlet guide tubes 411 are connected to an inlet centralise tube 43.

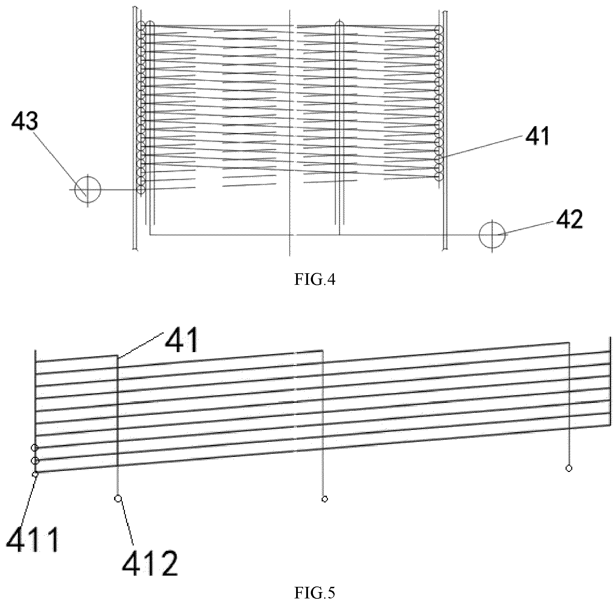

In some embodiments, as shown in FIG. 4-FIG.5,a plurality of water-cooled wall tubes 41 are disposed side-by-side in an upward and downward direction, and are coiled inside the shell 200 at the end of the second inlet guide tubes 411 in accordance with an equal-pitch helical ascent and are disposed at the circumference of the coil assembly 1. Each of the water-cooled wall tube 41 inlet end connected to the second inlet guide tube 411, the liquid outlet end connected to the second outlet guide tube 412; a plurality of the second outlet guide tubes 412 are connected to the outlet centralise tube 42; a plurality of the second inlet guide tube 411 are connected to the inlet centralise tube 43. The water-cooled wall tube group 4 not only can lower the wall temperature of shell 200, but also can be able to recycle heat to produce a certain amount of saturated steam, and the water-cooled wall tube 41 are made of the carbon steel or low alloy steel non-ferrous steel,which is not only a good energy saving parts, but also a good energy saving method.

Advantageously,as shown in Fig. 5, the highest point of a plurality of the water-cooled wall tubes 41 in the axial direction of the shell 200 is in the same plane, which can be understood as ensuring that the highest point of the water-cooled wall tubes 41 is in the same plane as far as possible to ensure that the wall temperature of the shell 200 is uniformly lowered, regardless of how many the water-cooled wall tubes 41 there are. Exemplarily, the water-cooled wall tube group 4 comprises three water-cooled wall tubes 41, a first water-cooled wall tube, a second water-cooled wall tube and a third water-cooled wall tube in ascending order from the bottom to the top; wherein the first water-cooled wall tube, the second water-cooled wall tube and the third water-cooled wall tube are simultaneously coiled inside the shell 200 in an equally spaced spiral upward manner until they reach the uppermost part, in order to keep the highest point of the first water-cooled wall tube, the second water-cooled wall tube and the third water-cooled wall tube in the same plane, the third water-cooled wall tube first ends its coiling and extends downwardly to connect with the outlet centralise tube 42; then the second water-cooled wall tube ends its coiling and extends downwardly to connect with the outlet centralise tube 42; and lastly the third water-cooled wall tube ends its coiling and extends downwardly to connect with the outlet centralise tube 42. That is, the highest point of the a plurality of water-cooled wall tubes in the same plane of the first water-cooled wall tube, the second water-cooled wall tube, and the third water-cooled wall tube extends downward at the position close to the circumferential evenly distributed, which can effectively reduce the temperature difference on the shell 200 in the same plane so as to homogenise the temperature of the wall of the shell 200, and increase the lifespan of the shell 200. The above setup is an exemplary but non-limiting description.

In some embodiments, the heat recycling unit 100 comprises a guard cylinder 45; the guard cylinder 45 is disposed on the outer circumferential edge of the coil assembly 1 and between the coil assembly 1 and the water-cooled wall tube group 4.

In some embodiments, as shown in FIG. 2, a guard cylinder 45 is disposed on the entire outer circumference of the coil assembly 1, and the function of the guard cylinder 45 is to ensure that the maximum amount of heat flow passes through the various layers of the coil 11 of the coil assembly 1 from top to bottom, preventing short-circuiting of the heat flow and minimising the flow of the heat flow to the inner wall of the shell 200, so as to maximise heat recycling and to protect the inner wall of the shell 200.

In some embodiments, the combustion unit 500 further comprises a support assembly 51 for supporting the fixed platinum mesh layer 501; the support assembly 51 comprises a support member, the support member is disposed underneath the platinum mesh layer 501 for supporting the platinum mesh layer 501. In some embodiments, the support structure comprises a base 512 at least, the base 512 being disposed underneath an outer edge of the platinum mesh layer 501. In some embodiments, the support structure further comprises a grid support frame 502 disposed below the platinum mesh layer 501. The grid support frame 502 is made of a high temperature resistant duplex alloy steel material and is fabricated from a forging turning process.

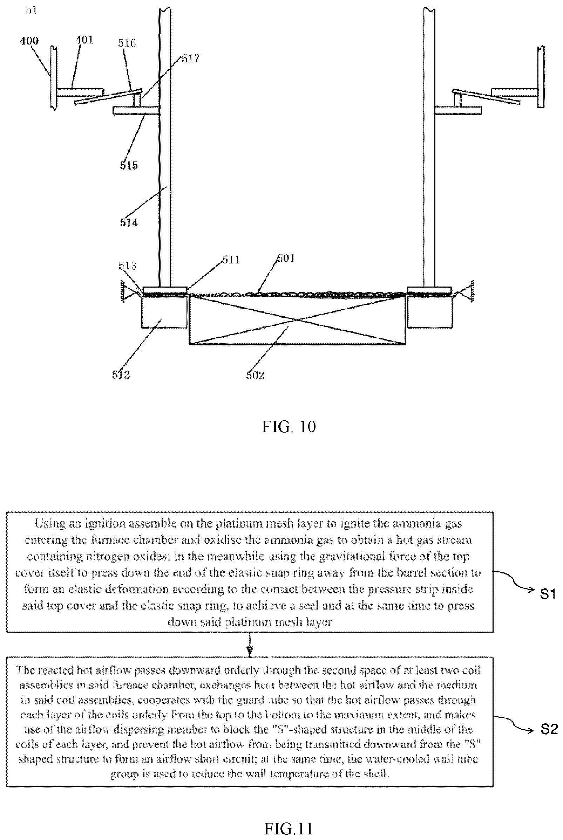

Wherein in some embodiments, the support assembly 51 comprises a support member, using the support member to be provided below the platinum mesh layer 501, and the support assembly 51 further comprises an elastic compression device. In some embodiments, the elastic compression device comprises a gasket 513, an inverted T-shaped support ring, an elastic snap ring 516, and a cylinder section 514, exemplarily as shown in FIG. 10; the gasket 513 is disposed at each side of the top and bottom of the platinum mesh layer 501; wherein the inverted T-shaped support ring is disposed on an external part of the hollow circular cylinder section 514, which can be understood to be a heat-resistant alloy; an elastic snap ring 516 is disposed on the overhead of the inverted T-shaped support ring; and the inverted T-shaped support ring, the elastic snap ring 516, and the hollow circular cylinder section 514 are overlapping in the central axis; the pressure strip 401 welded on the lower cylinder inside the top cover 400 is connected with the elastic snap ring 516. In some embodiments the inverted T-shaped support ring comprises a support circle 515 and a support ring 517; wherein the support circle 515 is fixedly disposed on the outside of the hollow circular cylinder section 514, and in some embodiments the support circle 515 is welded-fixed to the outside of the cylinder section 514; the support ring 517 is fixedly disposed on top of the support circle 515, and it is known that the diameter of the support circle 517 is shorter than that of the support ring 515; the support ring 517 is vertically welded and fixed in the middle of the support ring 515; the elastic snap ring 516 is snap-fitted to the support ring 517, the elastic snap ring 516 has a gap between the end of the elastic snap ring 516 close to the cylinder section 514 and the cylinder section 514, and the diameter of the elastic snap ring 516 is larger than the diameter of the support ring 515.

In some embodiments, a platinum mesh compression ring 511 is provided between the gasket 513 and the cylinder section 514.

In the support assembly 51 disclosed in the embodiments of the application, when the top cover 400 is sealed and connected with the middle structure of the ammonia oxidation reactor 1000, the pressure strip 401 welded on the lower cylinder of the top cover 400 contacts the elastic ity ring 516, and presses the elastic ity ring 516 downward at the end away from the cylinder section 514, forming an elastic deformation to achieve the seal while pressurising and fixing the platinum mesh layer 501, and the platinum mesh layer 501 will further be sealed when the temperature inside the ammonia oxidation reactor 1000 increases, and will further expand by its own elastic ity through thermal micro-expansion, and at the same time, the elastic snap ring 516 coordinates to offset part of the thermal expansion deformation through its own elastic deformation, so as to protect the entire structure from being thermally extruded and deformed or damaged.

In some embodiments, the combustion unit 500 further comprises a gas distributor 52; wherein the gas distributor 52 is disposed inside the furnace chamber 300.

In some embodiments, the gas distributor 52 can be understood as a three-stage gas distributor, the main part of the gas distributor 52 is made of stainless steel plate, and is set up inside the furnace chamber 300 by using a hanging rod for lifting and supporting, and its function is to mix the incoming mixture of ammonia and air again and evenly distribute it to the platinum mesh layer 501 in the lower part, so that the ammonia oxidation reaction is more effective and sufficient. The three-stage gas distributor comprises a first distributor, a second distributor, and a third distributor set sequentially from top to bottom; the first distributor, the second distributor, and the third distributor are set with a regular distribution of the distribution holes, wherein the distribution holes of the first distributor and the second distributor have the same diameter; the distribution holes of the third distributor have a diameter smaller than that of the second distributor.

In some embodiments, the combustion unit 500 further comprises a deflector cone 53; wherein the deflector cone 53 is disposed on the top cover 400 and inside the furnace chamber 300, and the gas distributor 52 is disposed inside the deflector cone 53 for evenly distributing the mixture of ammonia and air over the platinum mesh layer 501.

In some embodiments, a deflector cone 53 can be disposed on the circumference of the gas distributor 52, so that the mixture of ammonia and air flows and mixes again in the deflector cone 53, and by limiting the hot gas flow in the deflector cone 53, the mixture of ammonia and air is maximally allowed to pass through the gas distributor 52, so as to achieve an even distribution of the mixture of ammonia and air that enters into the furnace chamber 300 to the platinum mesh layer 501 so that the ammonia oxygenation reaction is more complete and sufficient.

According to the invention, the combustion unit 500 further comprises an ignition assembly 54; wherein the ignition assembly 54 comprises an igniter 541, an ignition distribution tube 542, and an ignition gas tube 543; wherein the igniter 541 ignites an ignition gas that is passed through the ignition gas tube 543, and uses the ignition distribution tube 542 to ignite the entire platinum mesh layer 501.

In some embodiments, an igniter 541 is disposed on the top cover 400, and in some embodiments, the igniter 541 is an electronic lighter, disposed above the ignition distribution tube 542, and the igniter 541 ignites the ignition gas; wherein a fire-breathing hole is disposed underneath the ignition distribution tube 542, so as to make the flame generated by the ignition gas dispersed downward to ignite the entire surface of the platinum mesh layer 501, and ignite the ammonia gas as evenly as possible. The embodiment of the application has an ignition gas passed through the ignition gas tube 543, wherein the ignition gas can be interpreted as hydrogen, which can realise the hydrogen combustion fire-breathing.

In some embodiments, the top cover 400 is equipped with at least one viewing window 55 for observing the combustion within the furnace chamber 300. In some embodiments, the top cover 400 is disposed with one or more viewing windows 55, wherein the observation of the combustion within the furnace chamber 300 is carried out by means of a sight glass in the viewing window 55

The combustion in the furnace chamber 300 can also be checked by the installation of the observation window 55, and if the combustion in the furnace chamber 300 is unsatisfactory, the ignition assembly 54 can be used to re-ignite the ignition or by adjusting the amount of the ignition gas so as to adjust the combustion coverage.

**In** some embodiments, the top cover 400 is disposed with a protective air duct; for supplying a protective gas into the furnace chamber 300 to prevent high temperatures in the dead zone.

Wherein the grid support frame 502 connected in sealing of the shell 200 and the top cover 400, so the region surrounded by the bottom of the platinum mesh layer 501 and the inner wall of the shell 200 is all post-combustion gas;the region surrounded by the upper part of the platinum mesh layer 501 and the inner wall of the shell 200 is ammonia-air mixture, but in the region surrounded by the upper part of the platinum mesh layer 501 and the inner wall of the shell 200, the region surrounded by the outer wall of the cylinder section 514, the outer wall of the deflector cone 53, and the inner wall of the shell 200, is basically no flow space, and therefore protective air should be passed into the top cover 400 to ensure that a high-temperature dead zone is not formed, wherein the pressure of the protective air is higher than the pressure inside the furnace, and when the temperature of the ammonia-air mixture is 200-400°C, it is enough that the temperature of the protective air does not exceed 300°C.

According to the invention, there is also disclosed a process for producing nitric acid, which process may be realised by the system of the application and/or other replaceable components. For embodiment, the process of the application is realised by using individual components of the system of the application.

The process comprises the following steps, as shown in FIG. 11:
S1: using the ignition assembly 54, the platinum mesh layer 501 ignite the ammonia gas in the furnace chamber 300 and oxidise the ammonia gas, and obtain a hot gas stream containing nitrogen oxides; in this process utilising the gravity of the top cover 400 itself, according to the compression strip 401 in the top cover 400 contacting the elastic snap ring 516, pressing the elastic snap ring 516 down at one end away from the cylinder section 514 to form an elastic deformation, to achieve sealing and at the same time pressurising the platinum mesh layer 501;
S2: The reacted hot gas flow passes sequentially downwardly through the second space of at least two coil assemblies in the furnace chamber 300, exchanging heat between the hot gas flow and the medium in the coil assembly, cooperating with the guard cylinder 45 so that the hot gas flow passes through each layer of the coils sequentially from top to bottom to the maximum extent possible; and utilize the airflow dispersion 13 to sheild the coiler "S" shaped structure on the middle of each layer to prevent the hot airflow short-circuit by the hot airflow from the "S" shaped structure downward transmission; at the same time the utilization of the water-cooled wall tube group to reduce the wall temperature of the shell 200;
in some embodiments, in S1, hydrogen gas is circulated from the ignition gas tube 543, and then ignited by the igniter 541, and the ignited flame burns rapidly over a large area through the fire-breathing holes below the ignition distribution tube 542, and then the igniter 541 stops working, and the flame of the ignition distribution tube 542 directly and evenly heats the platinum mesh layer 501. And when the heating temperature of the platinum mesh layer 501 reaches the reaction temperature of the mixture of the ammonia and air gas, an ammonia-air mixture of 200-400°C consisting of ammonia and air which is fed from the inlet port on the top cover 400. As indicated by the arrow in FIG. 1, wherein the molar volume ratio of the ammonia gas is 8-12% based on the ammonia-air mixture, and the preferred molar volume ratio of the ammonia gas is 8, 9, 10, 11, or 12%, or any of these values; wherein the ammonia gas cannot be ignited in the ammonia-air mixture if the molar volume ratio of the ammonia gas is too low, e.g., less than 8%; and it will explode if the ammonia gas is too high, e.g., taking into account the actual production control accuracy in engineering and leaving a certain safety margin, then it is necessary to control the initial entry of ammonia in the ammonia-air mixture not to exceed 12%. Therefore, it is necessary to control the appropriate ratio of ammonia to air to ensure that the reaction is optimal.

The ammonia-air mixture is evenly distributed to the whole first space through the distribution of the gas distributor 52 and the infusion of the infusion cone 53, and then downward evenly distributed on the whole platinum mesh layer 501 catalyst surface and contact the platinum mesh layer 501 occuring the oxidation reaction, that is, after the ignition is successfully ignited, the ammonia-air mixture occurred in the exothermic combustion reaction under the catalysis of the platinum, and the platinum mesh layer 501 continues to release the heat in the nearby area, and the red light can be observed, and in addition the platinum mesh layer 501 is composed of many layers, mainly platinum elements, but it is necessary to explain: each layer of the elements are not necessarily the same, the general platinum mesh layer also contains palladium, rhodium and other elements; of which palladium elements can adsorb platinum, palladium element is conducive to reducing the platinum loss; rhodium element can be added to solidify platinum mesh to reduce the deformation of the increase in the contact area; in sum, palladium, rhodium and other elements to join the platinum mesh is able to increase the reaction effect and reduce the loss of platinum.

And the gas flow rate also need to be reasonably controlled, so that the ammonia-air mixture and platinum network have enough contact time to achieve the purpose of catalytic reaction, the reaction process is as follows:

4NH₃+5O₂=4NO+6H₂O △H=-907.28KJ (1)

2NO+O₂=2NO₂ △H=-112.6KJ (2)

3NO₂+H₂O=2HNO₃+NO △H=-136.2KJ (3)

The NO obtained from the oxidation reaction is the raw gas required for the production of nitric acid, which needs to be further reacted and converted into NO₂ in the subsequent processes and equipment, and then absorbed with water to generate nitric acid and purified to achieve the required concentration of the product. As the oxidation of ammonia to produce nitrogen oxides is a strong exothermic reaction, the heat released from the reaction will cause the reaction temperature to continue to rise, the maximum temperature can reach 800-1000 °C. In addition to maintaining the oxidation reaction, the excess heat recycling is necessary. When the oxidation reaction has reached a stable reaction, close the ignition gas tube 543 to stop the hydrogen input.

In some embodiments, in S2, as can be seen from the above, the 800-1000°C hot gas stream comprising nitrogen oxides migrates in a downward flow to the second space, where the heat recycling in the hot gas stream is carried out by using the heat recycling unit 100. Here, as described in detail above and without further elaboration, in S2, the hot gas stream is gradually reduced to 350-450°C after undergoing heat exchange and is then released into a post-process.

In the description of this application, it is to be understood that the terms "centre", "longitudinal", "transverse", "length ", "width", "thickness", "top", "bottom", "front", "back", "left", "right", "vertical ", "horizontal", "top", "bottom", "inside", "outside", "axial", "radial", "circumferential", etc. indicated the orientation or positional relationship is based on the attached drawings indicated, it is intended only to facilitate the description of the application and to simplify the description, not to indicate or imply that the device or element referred to must have a particular orientation, be constructed and operated in a particular orientation, and therefore is not to be construed as a limitation of the application.

Furthermore, the terms "first" and "second" are used for descriptive purposes only and are not to be understood as indicating or implying relative importance or implicitly specifying the number of technical features indicated. Thus, a feature defined with "first", "second" may expressly or implicitly include one or more such features. In the description of the application, "more than one" means two or more, unless otherwise expressly limited in some embodiments.

In this application, unless otherwise clearly specified and limited, the terms " installation", " connection", " link", " fixing", etc. shall be broadly construed, e.g., may be fixed or detachable or integral; may be mechanically or electrically connected; may be directly connected or connected through an intermediary; or may be directly connected or connected through an intermediary. For a person of average skill in the art, the specific meaning of the above terms in the present application may be understood on a case-by-case basis.

In the application, unless otherwise clearly specified and limited, the first feature being "above" or "below" the second feature may be a direct contact between the first and second features, or an indirect contact between the first and second features through an intermediate medium. Furthermore, the first feature being "above", " upper" and " over" the second feature may be that the first feature is directly above or diagonally above the second feature, or may simply mean that the first feature is horizontally higher than the second feature. The first feature is "below", "under" and "underneath" the second feature may be that the first feature is directly below or diagonally below the second feature, or may simply mean that the first feature is less horizontal than the second feature.

In the description of this specification, reference to the terms "an embodiment," "some embodiments," "exemplary," " embodiments," or "some embodiments" means that the specific features, structures, materials, or characteristics described in conjunction with the embodiment or embodiments are included in at least one embodiment or exemplary of this application. In this specification, schematic expressions of the above terms do not necessarily refer to the same embodiment or exemplary embodiment. Moreover, the specific features, structures, materials, or characteristics described may be combined in any one or more embodiments or embodiments in a suitable manner. In addition, those skilled in the art may combine different embodiments or embodiments described in this specification.

Although embodiments of the application have been shown and described above, it is to be understood that the above embodiments are exemplary and are not to be construed as a limitation of the application, and that one of common skill in the art may make changes, modifications, substitutions, and variations of the above embodiments within the scope of the application.

## Claims

1. An ammonia oxidation reactor (1000) for the producing of nitric acid, wherein it comprises
a shell (200) and a top cover (400) over said shell (200) to form a furnace chamber (300); said furnace chamber (300) comprising a first space and a second space which are connected in an upward and a downward direction;
a combustion unit (500), which is located in said first space and comprises a platinum mesh layer (501), wherein a combustion reaction is performed in the medium of said platinum mesh layer (501) until the temperature of said platinum mesh layer (501) is sufficient to oxidise ammonia gases entering into said furnace chamber (300) to produce nitrogen oxides; and
a heat recycling unit (100), which is located in said second space, for recycling heat from a hot gas stream generated by combustion of said combustion unit (500) inside said first space and migrating to said second space; said heat recycling unit (100) comprising at least two coil assemblies (1); wherein two of said coil assemblies (1) are provided at different heights inside said furnace chamber (300) along an axial direction of said furnace chamber (300); and two of said coil assemblies (1) are connected in parallel between an inlet header (2) and an outlet header (3); said coil assembly (1) comprising a plurality of coils (11) disposed in the axial direction along said coil assembly (1); said coil (11) is connected to a first inlet guide tube (113) and a first outlet guide tube (114) at both ends separately; said first outlet guide tube (114) of said coil (11) at the upper level is in the axial direction of said coil assembly (1) corresponding to the first inlet guide tube (113) of said coil (11) at the lower level; said first inlet guide tube (113) is connected to said inlet header (2), said first outlet guide tube (114) is connected to said outlet header (3);
in the horizontal plane of said coil (11), said coil (11) is coiled from first inlet guide tube (113) from outside to inside in a first direction in an equidistant helix to form a plurality of first coil rings (111) of different circle diameters and said coil (11) is internally bent into an "S" shape and then coiled from inside to outside in a second direction in an equally spaced helix to form a plurality of second coil rings (112) of different circle diameters; said second coil ring (112) is located between two adjacent said first coil rings (111); wherein the first direction is opposite to the second direction;
said combustion unit (500) comprises an ignition assembly (54); wherein said ignition assembly (54) comprises an igniter (541), an ignition distributor tube (542) and an ignition gas tube (543); wherein said igniter (541) ignites an ignition gas passed through said ignition gas tube (543) and ignites the entire layer of said platinum mesh by using said ignition distributor tube (542).

2. The ammonia oxidation reactor (1000) according to claim 1, wherein said heat recycling unit (100) further comprises a water-cooled wall tube group (4); said water-cooled wall tube group (4) is circumferentially disposed inside the furnace chamber (300) closely adjacent to said shell (200); and said water-cooled wall tube group (4) is disposed around the outer circumference of said coil assembly (1).

3. The ammonia oxidation reactor (1000) according to claim 1, wherein said coil assembly (1) comprises a plurality of fixing assemblies, one said fixing assembly (12) being disposed on each of said coils (11); said fixing assembly (12) comprising a plurality of tie members (121); each of the plurality of tie members (121) being disposed radially circumferentially in the plane of said coils (11) and wrapped around the exterior of said coils (11) to tie down said coils (11).

4. The ammonia oxidation reactor (1000) according to claim 3, wherein said fixing assembly (12) comprises an position adjustment assembly (122), said position adjustment assembly (122) comprising:
a plurality of first position adjustment assemblies; the plurality of first position adjustment assemblies are radially disposed in the plane of said coil (11); said first position adjustment assembly (1221) comprises a plurality of first locating members (12211) radially disposed in the same orientation; said first locating members (12211) are disposed in the gap between said first coil ring (111) and said second coil ring (112); said first locating members (12211) comprise two first locating blocks (122111) disposed back-to-back; two said first locating blocks (122111) are semi-enclosed to said first coil ring (111) and said second coil ring (112) separately; and
a plurality of second position adjustment assemblies; the plurality of second position adjustment assemblies being radially disposed in the plane of said coil assembly (1);
said second position adjustment assembly (1222) comprises a plurality of second locating members (12221) radially disposed in the same orientation; said second locating members (12221) being disposed in the gap between said first coil ring (111) and said second coil ring (112); said second locating member (12221) comprises two backwardly disposed second locating blocks (122211); said second locating blocks (122211) being semi-enclosed to said first coil ring (111) and said second coil ring (112); wherein in the horizontal plane of said coil (11) said first position adjustment assembly (1221) and said second position adjustment assembly (1222) are located on both sides of said tie member (121) separately;
said first locating member (12211) and said second locating member (12221) are both disposed apart within the gap between said first coil ring (111) and said second coil ring (112), and said first locating member (12211) and said second locating member (12221) are disposed alternately within the gap formed by said first coil ring (111) and said second coil ring (112).

5. The ammonia oxidation reactor (1000) according to any one of claims 1-4, wherein said coil assembly (1) comprises a plurality of airflow dispersing members (13), each said coil (11) is disposed with one said airflow dispersing member (13) above each said coil (11); said airflow dispersing member (13) corresponding to said "S" shaped structure in the axial direction of said coil assembly (1), said airflow dispersing member (13) shields said "S" shaped structure.

6. The ammonia oxidation reactor (1000) according to claim 5, wherein said inlet header (2) is equipped with at least two throttle hole joints; each of two said throttle hole joints connects two said coil assemblies (1) separately;
said water-cooled wall tube group (4) comprises; a plurality of water-cooled wall tubes (41); the plurality of water-cooled wall tubes (41) disposed side by side in an equal-pitch spiral coil (11) in an axial direction along said furnace chamber (300);
each said water-cooled wall tube (41) is provided with a second inlet guide tube (411) and a second outlet guide tube (412) at each end; outlet centralise tube (42), said second outlet guide tube (412) on each of said water-cooled wall tubes (41) connects to said outlet centralise tube (42) separately; and inlet centralise tube (43), said second inlet guide tube (411) on each of said water-cooled wall tubes (41) connects to said inlet centralise tube (43) separately; the highest point of the plurality of water-cooled wall tubes (41) axially upwardly of said furnace chamber (300) is in the same plane.

7. The ammonia oxidation reactor (1000) according to claim 2, wherein said heat recycling unit (100) comprises a guard cylinder (45); said guard cylinder (45) is disposed on an outer circumferential edge of said coil assembly (1) and said guard cylinder (45) is disposed between said coil assembly (1) and said water-cooled wall tube group (4).

8. The ammonia oxidation reactor (1000) according to claim 5, wherein said combustion unit (500) further comprises a support assembly (51) for supporting and fixing said platinum mesh layer (501); said support assembly (51) comprises a support member, said support member being disposed below said platinum mesh layer (501) for supporting said platinum mesh layer (501).

9. The ammonia oxidation reactor (1000) according to claim 8, wherein said support assembly (51) further comprises an elastic compression member, said elastic compression member comprises a gasket (513), an inverted T-shaped support ring (517), an elastic snap ring (516) and a cylinder section (514); wherein a gasket (513) is provided at the top and bottom of said platinum mesh layer (501); wherein said inverted T-shaped support ring (517) is located on the exterior of said hollow circular cylinder section (514); wherein an elastic snap ring (516) is disposed on top of said inverted T-shaped support ring (517); wherein the central axes of said inverted T-shaped support ring (517), said elastic snap ring (516) and hollow circular of said cylinder section (514) are overlapping; wherein a press strip (401) is disposed in said top cover (400), said press strip (401) is connected with said elastic snap ring (516); said inverted T-shaped support ring (517) comprises a support circle (515) and a support ring (517); wherein said support circle (515) is fixedly disposed on the exterior hollow circular of said cylinder section (514); said support ring (517) is fixedly disposed above said support circle (515); and said resilient snap ring is disposed above said support ring (517);
said support circle (515) is welded and fixed on the outside of said cylinder section (514); the diameter of said support ring (517) is smaller than the diameter of said support circle (515), said support ring (517) is vertically welded and fixed to the middle of said support circle (515);
said resilient snap ring is snapped to said support ring (517), said resilient snap ring has a gap between said resilient snap ring and said cylinder section (514), and said resilient snap ring has a diameter larger than the diameter of said support circle (515); said cylinder section (514) is a high temperature resistant alloy;
a platinum mesh compression ring (511) is disposed between said gasket (513) and said cylinder section (514).

10. The ammonia oxidation reactor (1000) according to claim 9, wherein said support assembly (51) at least comprises a base (512), said base (512) being disposed below the outer edge of said platinum mesh layer (501);
said support assembly (51) further comprises a grid support frame (502), said grid support frame (502) is disposed below said platinum mesh layer (501);
said combustion unit (500) further comprises a gas distributor (52); wherein said gas distributor (52) is disposed inside said furnace chamber (300);
said combustion unit (500) further comprises a deflector cone (53); wherein said deflector cone (53) is disposed on said top cover (400) and is located in said chamber, and wherein said gas distributor (52) is disposed in said deflector cone (53) for evenly distributing a mixture of ammonia gas and air to said platinum mesh layer (501).

11. The ammonia oxidation reactor (1000) according to claim 1, wherein said top cover (400) is equipped with at least one observation window (55) for observing the combustion situation in said furnace chamber (300);
said top cover (400) is equipped with a protective air duct; for passing protective gas into said furnace chamber (300) to prevent high temperatures in the dead zone.

12. A method for producing nitric acid, wherein an ammonia oxidation reactor as claimed in any one of claims 1-11 is utilised for the production of nitric acid.

13. The method according to claim 12, wherein the method comprises the following steps; igniting the ammonia gas entering the furnace chamber (300) on the platinum mesh layer (501) using an ignition assembly (54) and oxidising the ammonia gas, to obtain a gaseous hot gas stream containing nitrogen oxides; in the process using the gravitational force of the top cover (400) itself to press down the end of the resilient ring away from the cylinder section to form an elastic deformation according to the contact between the pressure strip (401) inside said top cover (400) and the resilient snap ring, to achieve sealing and pressurising at the same time; the hot gas after the reaction flow passes through the second space of at least two coil assemblies (1, 11) in the furnace chamber (300) in a downward sequence, exchanging heat between the hot airflow and the medium in the coil assembly (1), with the guard cylinder makes the hot airflow maximally through the layers of the coil from top to bottom sequentially, and utilize airflow dispersing member (13) to shield the "S"-shaped structure of the middle layers of the coil preventing the hot airflow from the "S"-shaped structure downward transmission to form airflow short circuit; at the same time, use the water-cooled wall tube group (41) to reduce the wall temperature of the shell.

14. The method according to claim 12, wherein hot gas stream after said reaction has a temperature of 800-1000°C, an outlet temperature of 350-450°C after heat exchange with said coil assembly (1);
said furnace chamber (300) inlet gas is an ammonia-air mixture comprising ammonia and air;
said ammonia-air mixture is at a temperature of 200-400°C, and wherein the molar volume ratio of ammonia is 8-12% based on said ammonia-air mixture.

## Patentansprüche

1. Ein Ammoniakoxidationsreaktor (1000) zur Herstellung von Salpetersäure, der Folgendes umfasst
ein Gehäuse (200) und eine obere Abdeckung (400) über dem Gehäuse (200), um eine Ofenkammer (300) zu bilden; wobei die Ofenkammer (300) einen ersten Raum und einen zweiten Raum umfasst, die in Aufwärts- und Abwärtsrichtung miteinander verbunden sind;
eine Verbrennungseinheit (500), die sich in dem ersten Raum befindet und eine Platinnetzschicht (501) umfasst, wobei eine Verbrennungsreaktion in dem Medium der Platinnetzschicht (501) durchgeführt wird, bis die Temperatur der Platinnetzschicht (501) ausreicht, um in die Ofenkammer (300) eintretende Ammoniakgase zu oxidieren, um Stickoxide zu erzeugen; und
eine Wärmerückgewinnungseinheit (100), die sich in dem zweiten Raum befindet, zum Rückgewinnen von Wärme aus einem heißen Gasstrom, der durch die Verbrennung der Verbrennungseinheit (500) in dem ersten Raum erzeugt wird und in den zweiten Raum strömt; wobei die Wärmerückgewinnungseinheit (100) mindestens zwei Spulenanordnungen (1) umfasst; wobei zwei der Spulenanordnungen (1) in unterschiedlichen Höhen innerhalb der Ofenkammer (300) entlang einer axialen Richtung der Ofenkammer (300) vorgesehen sind; und zwei der Spulenanordnungen (1) parallel zwischen einem Einlassverteiler (2) und einem Auslassverteiler (3) verbunden sind; wobei die Spulenanordnung (1) eine Vielzahl von Spulen (11) umfasst, die in axialer Richtung entlang der Spulenanordnung (1) angeordnet sind;
wobei die Spule (11) an beiden Enden separat mit einem ersten Einlassführungsrohr (113) und einem ersten Auslassführungsrohr (114) verbunden ist; wobei das erste Auslassführungsrohr (114) der Spule (11) auf der oberen Ebene in axialer Richtung der Spulenanordnung (1) dem ersten Einlassführungsrohr (113) der Spule (11) auf der unteren Ebene entspricht; das erste Einlassführungsrohr (113) ist mit dem Einlassverteiler (2) verbunden, das erste Auslassführungsrohr (114) ist mit dem Auslassverteiler (3) verbunden;
In der horizontalen Ebene der Spule (11) ist die Spule (11) von einem ersten Einlassführungsrohr (113) von außen nach innen in einer ersten Richtung in einer gleichmäßigen Helix gewickelt, um eine Vielzahl von ersten Spulenringen (111) mit unterschiedlichen Kreisdurchmessern bildet; und die Spule (11) innen zu einer "S"-Form gebogen und dann von innen nach außen in einer zweiten Richtung in einer gleichmäßig beabstandeten Helix gewickelt wird, um eine Vielzahl von zweiten Spulenringen (112) mit unterschiedlichen Kreisdurchmessern zu bilden; der zweite Spulenring (112) befindet sich zwischen zwei benachbarten ersten Spulenringen (111); wobei die erste Richtung entgegengesetzt zur zweiten Richtung ist;
die Verbrennungseinheit (500) eine Zündvorrichtung (54) umfasst; wobei die Zündvorrichtung (54) einen Zünder (541), ein Zündverteilerrohr (542) und ein Zündgasrohr (543) umfasst; wobei der Zünder (541) ein durch das Zündgasrohr (543) geleitetes Zündgas entzündet und unter Verwendung des Zündverteilerrohrs (542) die gesamte Schicht des Platingitters entzündet.

2. Ammoniakoxidationsreaktor (1000) nach Anspruch 1, wobei die Wärmerückgewinnungseinheit (100) ferner eine wassergekühlte Wandrohrgruppe (4) umfasst; wobei die wassergekühlte Wandrohrgruppe (4) in Umfangsrichtung innerhalb der Ofenkammer (300) dicht neben dem Mantel (200) angeordnet ist; und wobei die wassergekühlte Wandrohrgruppe (4) um den Außenumfang der Spulenanordnung (1) herum angeordnet ist.

3. Ammoniakoxidationsreaktor (1000) nach Anspruch 1, wobei die Spulenanordnung (1) mehrere Befestigungsanordnungen umfasst, wobei eine Befestigungsanordnung (12) an jeder der Spulen (11) angeordnet ist; wobei die Befestigungsanordnung (12) mehrere Verbindungselemente (121) umfasst; wobei jedes der mehreren Verbindungselemente (121) radial umfänglich in der Ebene der Spulen (11) angeordnet ist und um die Außenseite der Spulen (11) gewickelt ist, um die Spulen (11) zu befestigen.

4. Ammoniakoxidationsreaktor (1000) nach Anspruch 3, wobei die Befestigungsvorrichtung (12) eine Positionsverstellvorrichtung (122) umfasst, wobei die Positionsverstellvorrichtung (122) umfasst:
eine Vielzahl von ersten Positionsverstellvorrichtungen; wobei die Vielzahl von ersten Positionsverstellvorrichtungen radial in der Ebene der Spule (11) angeordnet ist; die erste Positionsverstellbaugruppe (1221) mehrere erste Positionierungselemente (12211) umfasst, die radial in derselben Ausrichtung angeordnet sind; die ersten Positionierungselemente (12211) sind in dem Spalt zwischen dem ersten Spulenring (111) und dem zweiten Spulenring (112) angeordnet; die ersten Positionierungselemente (12211) zwei erste Positionierungsblöcke ( ) umfassen, die Rücken an Rücken angeordnet sind; die beiden ersten Positionierungsblöcke (122111) sind separat zum ersten Spulenring (111) und zum zweiten Spulenring (112) halb umschlossen; und
eine Vielzahl von zweiten Positionsverstellvorrichtungen; wobei die Vielzahl von zweiten Positionsverstellvorrichtungen radial in der Ebene der Spulenanordnung (1) angeordnet ist; die zweite Positionsverstelleinheit (1222) mehrere zweite Positionierungselemente (12221) umfasst, die radial in derselben Ausrichtung angeordnet sind; wobei die zweiten Positionierungselemente (12221) in dem Spalt zwischen dem ersten Spulenring (111) und dem zweiten Spulenring (112) angeordnet sind; wobei das zweite Positionierungselement (12221) zwei nach hinten angeordnete zweite Positionierungsblöcke (122211) umfasst; wobei die zweiten Positionierungsblöcke (122211) gegenüber dem ersten Spulenring (111) und dem zweiten Spulenring (112) halb geschlossen sind; wobei in der horizontalen Ebene der Spule (11) die erste Positionsverstellvorrichtung (1221) und die zweite Positionsverstellvorrichtung (1222) getrennt auf beiden Seiten des Verbindungselements (121) angeordnet sind;
wobei das erste Positionierungselement (12211) und das zweite Positionierungselement (12221) beide voneinander beabstandet innerhalb des Spalts zwischen dem ersten Spulenring (111) und dem zweiten Spulenring (112) angeordnet sind, und das erste Positionierungselement (12211) und das zweite Positionierungselement (12221) sind abwechselnd innerhalb des durch den ersten Spulenring (111) und den zweiten Spulenring (112) gebildeten Spalts angeordnet.

5. Der Ammoniakoxidationsreaktor (1000) gemäß einem der Ansprüche 1 bis 4,
wobei die Spulenanordnung (1) eine Vielzahl von Luftstromverteilungselementen (13) umfasst, wobei jede Spule (11) mit einem Luftstromverteilungselement (13) über jeder Spule (11) angeordnet ist; wobei das Luftstromverteilungselement (13) der S-förmigen Struktur in axialer Richtung der Spulenanordnung (1) entspricht, wobei das Luftstromverteilungselement (13) die S-förmige Struktur abschirmt.

6. Ammoniakoxidationsreaktor (1000) nach Anspruch 5, wobei der Einlassverteiler (2) mit mindestens zwei Drosselbohrungsverbindungen ausgestattet ist; jede der beiden Drosselbohrungsverbindungen verbindet zwei der Spulenanordnungen (1) separat;
die wassergekühlte Wandrohrgruppe (4) umfasst: eine Vielzahl von wassergekühlten Wandrohren (41); wobei die Vielzahl von wassergekühlten Wandrohren (41) nebeneinander in einer Spirale (11) mit gleichem Abstand in axialer Richtung entlang der Ofenkammer (300) angeordnet ist; jedes der wassergekühlten Wandrohre (41) ist an jedem Ende mit einem zweiten Einlassführungsrohr (411) und einem zweiten Auslassführungsrohr (412) versehen; Auslasszentrierrohr (42), wobei das zweite Auslassführungsrohr (412) an jedem der wassergekühlten Wandrohre (41) separat mit dem Auslasszentrierrohr (42) verbunden ist; und ein Einlasszentrierrohr (43), wobei das zweite Einlassführungsrohr (411) an jedem der wassergekühlten Wandrohre (41) separat mit dem Einlasszentrierrohr (43) verbunden ist; der höchste Punkt der mehreren wassergekühlten Wandrohre (41) axial oberhalb der Ofenkammer (300) liegt in derselben Ebene.

7. Ammoniakoxidationsreaktor (1000) nach Anspruch 2, wobei die Wärmerückgewinnungseinheit (100) einen Schutzzylinder (45) umfasst; der Schutzzylinder (45) an einer Außenumfangskante der Spulenanordnung (1) angeordnet ist und der Schutzzylinder (45) zwischen der Spulenanordnung (1) und der wassergekühlten Wandrohrgruppe (4) angeordnet ist.

8. Ammoniakoxidationsreaktor (1000) nach Anspruch 5, wobei die Verbrennungseinheit (500) ferner eine Stützbaugruppe (51) zum Stützen und Befestigen der Platingitterschicht (501) umfasst; wobei die Stützbaugruppe (51) ein Stützelement umfasst, wobei das Stützelement unterhalb der Platingitterschicht (501) angeordnet ist, um die Platingitterschicht (501) zu stützen.

9. Der Ammoniakoxidationsreaktor (1000) gemäß Anspruch 8, wobei die Stützvorrichtung (51) ferner ein elastisches Druckelement umfasst, wobei das elastische Druckelement eine Dichtung (513), einen umgekehrten T-förmigen Stützring (517), einen elastischen Sprengring (516) und einen Zylinderabschnitt (514) umfasst; wobei eine Dichtung (513) an der Ober- und Unterseite der Platinmaschensicht (501) vorgesehen ist; wobei sich der umgekehrte T-förmige Stützring (517) an der Außenseite des hohlen kreisförmigen Zylinderabschnitts (514) befindet; wobei ein elastischer Sprengring (516) oben auf dem umgekehrten T-förmigen Stützring (517) angeordnet ist; wobei sich die Mittelachsen des umgekehrten T-förmigen Stützrings (517), des elastischen Sprengrings (516) und des hohlen Kreises des Zylinderabschnitts (514) überlappen; wobei ein Druckstreifen (401) in der oberen Abdeckung (400) angeordnet ist, wobei der Druckstreifen (401) mit dem elastischen Sprengring (516) verbunden ist;
wobei der umgekehrte T-förmige Stützring (517) einen Stützring (515) und einen Stützring (517) umfasst; wobei der Stützring (515) fest auf dem äußeren Hohlkreis des Zylinderabschnitts (514) angeordnet ist; der Stützring (517) fest über dem Stützring (515) angeordnet ist; und der elastische Sprengring über dem Stützring (517) angeordnet ist;
der Stützring (515) an der Außenseite des Zylinderabschnitts (514) angeschweißt und befestigt ist; der Durchmesser des Stützrings (517) kleiner ist als der Durchmesser des Stützrings (515), wobei der Stützring (517) vertikal an die Mitte des Stützrings (515) angeschweißt und befestigt ist;
der elastische Sprengring ist an den Stützring (517) geschnappt, der elastische Sprengring weist einen Spalt zwischen dem elastischen Sprengring und dem Zylinderabschnitt (514) auf, und der elastische Sprengring hat einen Durchmesser, der größer ist als der Durchmesser des Stützrings (515); der Zylinderabschnitt (514) ist eine hochtemperaturbeständige Legierung;
ein Platin-Maschen-Kompressionsring (511) ist zwischen der Dichtung (513) und dem Zylinderabschnitt (514) angeordnet.

10. Ammoniakoxidationsreaktor (1000) nach Anspruch 9, wobei die Stützbaugruppe (51) mindestens eine Basis (512) umfasst, wobei die Basis (512) unterhalb der Außenkante der Platingewebeschicht (501) angeordnet ist;
die Stützvorrichtung (51) ferner einen Gitterstützrahmen (502) umfasst, wobei der Gitterstützrahmen (502) unterhalb der Platinnetzschicht (501) angeordnet ist;
die Verbrennungseinheit (500) ferner einen Gasverteiler (52) umfasst; wobei der Gasverteiler (52) innerhalb der Ofenkammer (300) angeordnet ist;
die Verbrennungseinheit (500) ferner einen Ablenkkonus (53) umfasst; wobei der Ablenkkonus (53) auf der oberen Abdeckung (400) angeordnet ist und sich in der Kammer befindet, und wobei der Gasverteiler (52) in dem Ablenkkonus (53) angeordnet ist, um ein Gemisch aus Ammoniakgas und Luft gleichmäßig auf die Platingitterschicht (501) zu verteilen.

11. Ammoniakoxidationsreaktor (1000) nach Anspruch 1, wobei die obere Abdeckung (400) mit mindestens einem Beobachtungsfenster (55) zum Beobachten der Verbrennungssituation in der Ofenkammer (300) ausgestattet ist;
wobei die obere Abdeckung (400) mit einem Schutzluftkanal ausgestattet ist, um Schutzgas in die Ofenkammer (300) zu leiten, um hohe Temperaturen in der Totzone zu verhindern.

12. Verfahren zur Herstellung von Salpetersäure, wobei ein Ammoniakoxidationsreaktor gemäß einem der Ansprüche 1 bis 11 zur Herstellung von Salpetersäure verwendet wird.

13. Verfahren nach Anspruch 12, wobei das Verfahren die folgenden Schritte umfasst: Zünden des in die Ofenkammer (300) eintretenden Ammoniakgases auf der Platinschicht (501) unter Verwendung einer Zündvorrichtung (54) und Oxidieren des Ammoniakgases, um einen gasförmigen Heißgasstrom zu erhalten, der Stickoxide enthält; wobei dabei die Schwerkraft der oberen Abdeckung (400) selbst genutzt wird, um das Ende des elastischen Rings vom Zylinderabschnitt weg nach unten zu drücken, um eine elastische Verformung entsprechend dem Kontakt zwischen dem Druckstreifen (401) innerhalb der oberen Abdeckung (400) und dem elastischen Sprengring zu bilden, um gleichzeitig eine Abdichtung und eine Druckbeaufschlagung zu erreichen; das heiße Gas nach dem Reaktionsstrom strömt in einer Abwärtssequenz durch den zweiten Raum von mindestens zwei Spulenanordnungen (1, 11) in der Ofenkammer (300) und tauscht Wärme zwischen dem heißen Luftstrom und dem Medium in der Spulenanordnung (1) aus, wobei der Schutzzylinder den Heißluftstrom maximal durch die Schichten der Spule von oben nach unten sequenziell leitet und ein Luftstromverteilungselement (13) verwendet wird, um die S-förmige Struktur der mittleren Schichten der Spule abzuschirmen und zu verhindern, dass der Heißluftstrom von der S-förmigen Struktur nach unten übertragen wird und einen Luftstromkurzschluss bildet; gleichzeitig wird die wassergekühlte Wandrohrgruppe (41) verwendet, um die Wandtemperatur des Gehäuses zu reduzieren.

14. Verfahren nach Anspruch 12, wobei der Heißgasstrom nach der Reaktion eine Temperatur von 800-1000 °C und nach dem Wärmeaustausch mit der Spulenanordnung (1) eine Auslasstemperatur von 350-450 °C aufweist;
das in die Ofenkammer (300) eintretende Gas ein Ammoniak-Luft-Gemisch ist, das Ammoniak und Luft enthält;
das Ammoniak-Luft-Gemisch eine Temperatur von 200 bis 400 °C aufweist und wobei das molare Volumenverhältnis von Ammoniak 8 bis 12 % bezogen auf das Ammoniak-Luft-Gemisch beträgt.

## Revendications

1. Un réacteur d'oxydation à l'ammoniac (1000) pour la production d'acide nitrique, comprenant
une enveloppe (200) et un couvercle supérieur (400) recouvrant ladite enveloppe (200) pour former une chambre de four (300) ; ladite chambre de four (300) comprenant un premier espace et un deuxième espace qui sont reliés dans une direction ascendante et descendante ;
une unité de combustion (500), qui est située dans ledit premier espace et comprend une couche de maille de platine (501), dans laquelle une réaction de combustion est effectuée dans le milieu de ladite couche de maille de platine (501) jusqu'à ce que la température de ladite couche de maille de platine (501) soit suffisante pour oxyder les gaz d'ammoniac entrant dans ladite chambre de four (300) afin de produire des oxydes d'azote ; et
une unité de recyclage de chaleur (100), qui est située dans ledit deuxième espace, pour recycler la chaleur provenant d'un flux de gaz chaud généré par la combustion de ladite unité de combustion (500) à l'intérieur dudit premier espace et migrant vers ledit deuxième espace ; ladite unité de recyclage de chaleur (100) comprenant au moins deux ensembles de serpentins (1) ; dans laquelle deux desdits ensembles de serpentins (1) sont prévus à des hauteurs différentes à l'intérieur de ladite chambre de four (300) le long d'une direction axiale de ladite chambre de four (300) ; et deux desdits ensembles de serpentins (1) sont connectés en parallèle entre un collecteur d'entrée (2) et un collecteur de sortie (3) ; ledit ensemble de serpentins (1) comprenant une pluralité de serpentins (11) disposés dans la direction axiale le long dudit ensemble de serpentins (1) ; ledit serpentin (11) étant connecté à un premier tube de guidage d'entrée (113) et à un premier tube de guidage de sortie (114) aux deux extrémités séparément ; ledit premier tube de guidage de sortie (114) de ladite bobine (11) au niveau supérieur se trouve dans la direction axiale dudit ensemble de bobines (1) correspondant au premier tube de guidage d'entrée (113) de ladite bobine (11) au niveau inférieur ; ledit premier tube de guidage d'entrée (113) est relié audit collecteur d'entrée (2), ledit premier tube de guidage de sortie (114) est relié audit collecteur de sortie (3) ;
dans le plan horizontal de ladite bobine (11), ladite bobine (11) est enroulée à partir du premier tube de guidage d'entrée (113) de l'extérieur vers l'intérieur dans une première direction selon une hélice équidistante afin de former une pluralité de premiers anneaux de bobine (111) de diamètres circulaires différents, et ladite bobine (11) est pliée intérieurement en forme de « S », puis enroulée de l'intérieur vers l'extérieur dans une deuxième direction d' , selon une hélice équidistante, pour former une pluralité de deuxièmes anneaux de bobine (112) de diamètres circulaires différents ; ledit deuxième anneau en spirale (112) est situé entre deux desdits premiers anneaux en spirale adjacents (111) ; dans lequel la première direction est opposée à la deuxième direction ;
ladite unité de combustion (500) comprend un ensemble d'allumage (54) ; dans lequel ledit ensemble d'allumage (54) comprend un allumeur (541), un tube distributeur d'allumage (542) et un tube de gaz d'allumage (543) ; dans lequel ledit allumeur (541) allume un gaz d'allumage passant à travers ledit tube de gaz d'allumage (543) et allume toute la couche dudit treillis de platine en utilisant ledit tube de distribution d'allumage (542).

2. Le réacteur d'oxydation d'ammoniac (1000) selon la revendication 1, dans lequel ladite unité de recyclage de chaleur (100) comprend en outre un groupe de tubes à paroi refroidis à l'eau (4) ; ledit groupe de tubes à paroi refroidis à l'eau (4) est disposé circonférentiellement à l'intérieur de la chambre du four (300) à proximité immédiate de ladite enveloppe (200) ; et ledit groupe de tubes à paroi refroidis à l'eau (4) est disposé autour de la circonférence extérieure dudit ensemble de serpentins (1).

3. Le réacteur d'oxydation d'ammoniac (1000) selon la revendication 1, dans lequel ledit ensemble de serpentins (1) comprend une pluralité d'ensembles de fixation, un dit ensemble de fixation (12) étant disposé sur chacun desdits serpentins (11) ; ledit ensemble de fixation (12) comprenant une pluralité d'éléments de liaison (121) ; chacun des éléments de fixation (121) étant disposé radialement circonférentiellement dans le plan desdits serpentins (11) et enroulé autour de l'extérieur desdits serpentins (11) pour fixer lesdits serpentins (11).

4. Le réacteur d'oxydation à l'ammoniac (1000) selon la revendication 3, dans lequel ledit ensemble de fixation (12) comprend un ensemble de réglage de position (122), ledit ensemble de réglage de position (122) comprenant :
une pluralité de premiers ensembles de réglage de position ; la pluralité de premiers ensembles de réglage de position sont disposés radialement dans le plan de ladite bobine (11) ; ledit premier ensemble de réglage de position (1221) comprend une pluralité de premiers éléments de positionnement (12211) disposés radialement dans la même orientation ; lesdits premiers éléments de positionnement (12211) sont disposés dans l'espace entre ladite première bague de bobine (111) et ladite deuxième bague de bobine (112) ; lesdits premiers éléments de positionnement (12211) comprennent deux premiers blocs de positionnement (122111) disposés dos à dos ;
lesdits deux premiers blocs de positionnement (122111) sont semi-fermés par rapport à ladite première bague de bobine (111) et à ladite deuxième bague de bobine (112) séparément ; et
une pluralité de seconds ensembles de réglage de position ; la pluralité de seconds ensembles de réglage de position étant disposés radialement dans le plan dudit ensemble de bobines (1) ; ledit deuxième ensemble de réglage de position (1222) comprend une pluralité de deuxièmes éléments de positionnement (12221) disposés radialement dans la même orientation ; lesdits deuxièmes éléments de positionnement (12221) étant disposés dans l'espace entre ladite première bague de bobine (111) et ladite deuxième bague de bobine (112) ; ledit deuxième élément de positionnement (12221) comprend deux deuxièmes blocs de positionnement (122211) disposés vers l'arrière ; lesdits seconds blocs de positionnement (122211) étant semi-fermés par rapport à ladite première bague hélicoïdale (111) et à ladite seconde bague hélicoïdale (112) ; dans lequel, dans le plan horizontal de ladite bobine (11), ledit premier ensemble de réglage de position (1221) et ledit second ensemble de réglage de position (1222) sont situés séparément des deux côtés dudit élément de liaison (121) ;
ledit premier élément de positionnement (12211) et ledit deuxième élément de positionnement (12221) étant tous deux disposés à distance l'un de l'autre dans l'espace entre ladite première bague hélicoïdale (111) et ladite deuxième bague hélicoïdale (112), et ledit premier élément de positionnement (12211) et ledit deuxième élément de positionnement (12221) sont disposés en alternance dans l'espace formé par ladite première bague de bobine (111) et ladite deuxième bague de bobine (112).

5. Le réacteur d'oxydation à l'ammoniac (1000) selon l'une quelconque des revendications 1 à 4, dans lequel ledit ensemble de serpentins (1) comprend une pluralité d'éléments de dispersion du flux d'air (13), chaque dit serpentin (11) est disposé avec un dit élément de dispersion du flux d'air (13) au-dessus de chaque dit serpentin (11) ; ledit élément de dispersion du flux d'air (13) correspondant à ladite structure en forme de « S » dans la direction axiale dudit ensemble de serpentins (1), ledit élément de dispersion du flux d'air (13) protégeant ladite structure en forme de « S ».

6. Le réacteur d'oxydation à l'ammoniac (1000) selon la revendication 5, dans lequel ledit collecteur d'entrée (2) est équipé d'au moins deux joints à orifice d'étranglement ; chacun des deuxdits joints à orifice d'étranglement relie deuxdits ensembles de serpentins (1) séparément ;
ledit groupe de tubes à paroi refroidis à l'eau (4) comprend : une pluralité de tubes à paroi refroidis à l'eau (41) ; la pluralité de tubes à paroi refroidis à l'eau (41) étant disposés côte à côte dans une bobine spiralée à pas égal (11) dans une direction axiale le long de ladite chambre de four (300) ; chaque dit tube à paroi refroidi à l'eau (41) est muni d'un deuxième tube de guidage d'entrée (411) et d'un deuxième tube de guidage de sortie (412) à chaque extrémité ; un tube de centralisation de sortie (42), ledit deuxième tube de guidage de sortie (412) sur chacun desdits tubes à paroi refroidis à l'eau (41) se connecte audit tube de centralisation de sortie (42) séparément ; et un tube centralisateur d'entrée (43), ledit deuxième tube de guidage d'entrée (411) sur chacun desdits tubes à paroi refroidis à l'eau (41) se connectant séparément audit tube centralisateur d'entrée (43) ; le point le plus haut de la pluralité de tubes à paroi refroidis à l'eau (41) axialement vers le haut de ladite chambre de four (300) se trouvant dans le même plan.

7. Le réacteur d'oxydation d'ammoniac (1000) selon la revendication 2, dans lequel ladite unité de recyclage de chaleur (100) comprend un cylindre de protection (45) ; ledit cylindre de protection (45) est disposé sur un bord circonférentiel extérieur dudit ensemble de serpentins (1) et ledit cylindre de protection (45) est disposé entre ledit ensemble de serpentins (1) et ledit groupe de tubes à paroi refroidis à l'eau (4).

8. Le réacteur d'oxydation d'ammoniac (1000) selon la revendication 5, dans lequel ladite unité de combustion (500) comprend en outre un ensemble de support (51) pour supporter et fixer ladite couche de maille de platine (501) ; ledit ensemble de support (51) comprend un élément de support, ledit élément de support étant disposé sous ladite couche de maille de platine (501) pour supporter ladite couche de maille de platine (501).

9. Le réacteur d'oxydation à l'ammoniac (1000) selon la revendication 8, dans lequel ledit ensemble de support (51) comprend en outre un élément de compression élastique, ledit élément de compression élastique comprenant un joint d'étanchéité (513), une bague de support en forme de T inversé (517), un anneau élastique (516) et une section cylindrique (514) ; dans lequel un joint d'étanchéité (513) est prévu au sommet et à la base de ladite couche de maille de platine (501) ; dans lequel ladite bague de support en forme de T inversé (517) est située à l'extérieur de ladite section cylindrique circulaire creuse (514) ; dans lequel un anneau élastique à ressort (516) est disposé au sommet de ladite bague de support en forme de T inversé (517) ; dans lequel les axes centraux de ladite bague de support en forme de T inversé (517), dudit anneau élastique à ressort (516) et de ladite section cylindrique creuse (514) se chevauchent ; dans lequel une bande de pression (401) est disposée dans ledit couvercle supérieur (400), ladite bande de pression (401) étant reliée audit anneau élastique à ressort (516) ;
ladite bague de support en forme de T inversé (517) comprend un cercle de support (515) et une bague de support (517) ; dans lequel ledit cercle de support (515) est disposé de manière fixe sur le cercle creux extérieur d' e de ladite section cylindrique (514) ; ladite bague de support (517) est disposée de manière fixe au-dessus dudit cercle de support (515) ; et ledit anneau élastique est disposé au-dessus de ladite bague de support (517) ;
ledit cercle de support (515) est soudé et fixé à l'extérieur de ladite section cylindrique (514) ; le diamètre dudit anneau de support (517) est inférieur au diamètre dudit cercle de support (515), ledit anneau de support (517) est soudé verticalement et fixé au milieu dudit cercle de support (515) ;
ledit anneau élastique est encliqueté sur ledit anneau de support (517), ledit anneau élastique présente un espace entre ledit anneau élastique et ladite section cylindrique (514), et ledit anneau élastique a un diamètre supérieur au diamètre dudit cercle de support (515) ; ladite section cylindrique (514) est un alliage résistant aux hautes températures ;
une bague de compression en maille de platine (511) est disposée entre ledit joint (513) et ladite section cylindrique (514).

10. Réacteur d'oxydation d'ammoniac (1000) selon la revendication 9, dans lequel
ledit ensemble de support (51) comprend au moins une base (512), ladite base (512) étant disposée sous le bord extérieur de ladite couche de maille de platine (501) ;
ledit ensemble de support (51) comprend en outre un cadre de support de grille (502), ledit cadre de support de grille (502) étant disposé sous ladite couche de maille de platine (501) ;
ladite unité de combustion (500) comprend en outre un distributeur de gaz (52) ; dans lequel ledit distributeur de gaz (52) est disposé à l'intérieur de ladite chambre de four (300) ;
ladite unité de combustion (500) comprend en outre un cône déflecteur (53) ; dans lequel ledit cône déflecteur (53) est disposé sur ledit couvercle supérieur (400) et est situé dans ladite chambre, et dans lequel ledit distributeur de gaz (52) est disposé dans ledit cône déflecteur (53) pour distribuer uniformément un mélange d'ammoniac gazeux et d'air à ladite couche de maille de platine (501).

11. Le réacteur d'oxydation à l'ammoniac (1000) selon la revendication 1, dans lequel ledit couvercle supérieur (400) est équipé d'au moins une fenêtre d'observation (55) pour observer la situation de combustion dans ladite chambre de four (300) ;
ledit couvercle supérieur (400) est équipé d'un conduit d'air protecteur ; pour faire passer du gaz protecteur dans ladite chambre de four (300) afin d'empêcher des températures élevées dans la zone morte.

12. Un procédé de production d'acide nitrique, dans lequel un réacteur d'oxydation d'ammoniac selon l'une quelconque des revendications 1 à 11 est utilisé pour la production d'acide nitrique.

13. Le procédé selon la revendication 12, dans lequel le procédé comprend les étapes suivantes : allumer l'ammoniac gazeux entrant dans la chambre de four (300) sur la couche de maille de platine (501) à l'aide d'un ensemble d'allumage (54) et oxyder l'ammoniac gazeux, afin d'obtenir un flux de gaz chaud gazeux contenant des oxydes d'azote ; dans le processus, utiliser la force gravitationnelle du couvercle supérieur (400) lui-même pour appuyer sur l'extrémité de la bague élastique loin de la section cylindrique afin de former une déformation élastique en fonction du contact entre la bande de pression (401) à l'intérieur dudit couvercle supérieur (400) et la bague élastique, afin d'obtenir une étanchéité et une pressurisation en même temps ; le gaz chaud après le flux de réaction passe à travers le deuxième espace d'au moins deux ensembles de serpentins (1, 11) dans la chambre du four (300) dans une séquence descendante, échangeant de la chaleur entre le flux d'air chaud et le milieu dans l'ensemble de serpentins (1), le cylindre de protection permet au flux d'air chaud de traverser de manière séquentielle et maximale les couches de la bobine de haut en bas, et utilise un élément de dispersion du flux d'air (13) pour protéger la structure en « S » des couches intermédiaires de la bobine, empêchant ainsi le flux d'air chaud provenant de la structure en « S » de se transmettre vers le bas et de former un court-circuit du flux d'air ; en même temps, utilise le groupe de tubes muraux refroidis à l'eau (41) pour réduire la température de la paroi de l'enveloppe.

14. Le procédé selon la revendication 12, dans lequel le flux de gaz chaud après ladite réaction a une température de 800 à 1000 °C, une température de sortie de 350 à 450 °C après échange thermique avec ledit ensemble de serpentins (1) ;
ledit gaz d'entrée dans la chambre du four (300) est un mélange ammoniac-air comprenant de l'ammoniac et de l'air ;
ledit mélange ammoniac-air est à une température de 200 à 400 °C, et dans lequel le rapport molaire en volume de l'ammoniac est de 8 à 12 % par rapport audit mélange ammoniac-air.
